(19) Europäisches Patentamt
European Patent Office
Office européen des brevets

(11) EP 4 593 139 A1

(12) EUROPEAN PATENT APPLICATION
published in accordance with Art. 153(4) EPC

(43) Date of publication:
**30.07.2025 Bulletin 2025/31**

(21) Application number: **23923397.6**

(22) Date of filing: **24.02.2023**

(51) International Patent Classification (IPC):
***H01M 10/0525*** *(2010.01)*

(52) Cooperative Patent Classification (CPC):
Y02E 60/10

(86) International application number:
**PCT/CN2023/078089**

(87) International publication number:
**WO 2024/174221 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Central (HK)**

(72) Inventors:
- **LIU, Jiao**
  **Ningde, Fujian 352100 (CN)**
- **ZHANG, Limei**
  **Ningde, Fujian 352100 (CN)**
- **CHEN, Peipei**
  **Ningde, Fujian 352100 (CN)**
- **REN, Jiamo**
  **Ningde, Fujian 352100 (CN)**

(74) Representative: **Laufhütte, Dieter**
**Lorenz Seidler Gossel**
**Rechtsanwälte Patentanwälte**
**Partnerschaft mbB**
**Widenmayerstraße 23**
**80538 München (DE)**

# (54) LITHIUM SECONDARY BATTERY AND ELECTRIC DEVICE

(57) This application provides a lithium secondary battery (10) and an electrical device (600). The lithium secondary battery (10) includes: a positive electrode plate, where the positive electrode plate includes a positive current collector and a positive active material layer disposed on at least one side of the positive current collector, and a lithium-ion diffusion coefficient of the positive active material layer is $D_s$; and an electrolyte solution, where the electrolyte solution includes a solvent. The solvent includes at least one of compounds of the following Formula (I). A mass fraction of the compound of Formula (I) in the solvent is $W_1$. The mass fraction $W_1$ of the compound of Formula (I) and the lithium-ion diffusion coefficient $D_s$ of the positive active material layer satisfy: $2\times10^{-18}$ cm$^2$/s $\leq W_1 \times D_s \leq 8\times10^{-6}$ cm$^2$/s, and optionally, $3\times10^{-14}$ cm$^2$/s $\leq W_1 \times D_s \leq 7\times10^{-10}$ cm$^2$/s.

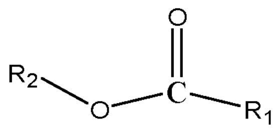

(I)

In the formula above, $R_1$ and $R_2$ each independently include at least one of a $C_1$ to $C_3$ alkyl or a $C_1$ to $C_3$ haloalkyl. By regulating the lithium-ion diffusion coefficient $D_s$ of the positive electrode material and the mass percent of the compound of Formula (I), the lithium secondary battery (10) can effectively improve the transmission rate of lithium ions in the electrolyte solution, and improve the energy density and fast-charge performance of the lithium secondary battery (10).

EP 4 593 139 A1

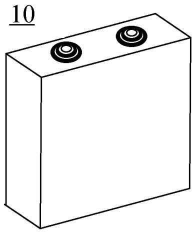


FIG. 1

## Description

### TECHNICAL FIELD

This application relates to the field of battery technology, and in particular, to a lithium secondary battery and an electrical device.

### BACKGROUND

In recent years, secondary batteries have been widely used in various electronic products and electric vehicles by virtue of relatively high power density and volumetric specific capacity. With the significant advancements and extensive application of secondary batteries, higher requirements are placed on the energy density, fast-charge performance, and the like of the batteries.

The fast charge of a lithium secondary battery relies on lithium ions being rapidly deintercalated from a positive active material, moving to a negative electrode through an electrolyte solution, and being rapidly intercalated into a negative active material. Therefore, the fast-charge performance of lithium secondary battery is closely related to the transmission rate of the lithium ions in the electrode material and the electrolyte solution. The diffusion coefficient of the lithium ions in the electrode material and the electrolyte solution is one of the parameters that reflect the transmission rate of the lithium ions in the electrode material and the electrolyte solution. However, the diffusion coefficient of the lithium ions in the electrode material can hardly match the diffusion coefficient of the lithium ions in the electrolyte solution, thereby severely impairing the charge and discharge performance of lithium secondary battery. Therefore, how to enhance the charge and discharge performance of the lithium secondary battery has become a pressing technical challenge.

### SUMMARY

This application is developed in view of the above technical challenge. An objective of this application is to provide a lithium secondary battery and an electrical device. The lithium secondary battery can increase the transmission rate of lithium ions in a positive active material layer and an electrolyte solution, thereby improving the fast-charge performance of the lithium secondary battery.

According to a first aspect, this application provides a lithium secondary battery. The lithium secondary battery includes: a positive electrode plate, where the positive electrode plate includes a positive current collector and a positive active material layer disposed on at least one side of the positive current collector, and a lithium-ion diffusion coefficient of the positive active material layer is $D_s$; and an electrolyte solution, where the electrolyte solution includes a solvent. The solvent includes at least one of compounds of the following Formula (I). A mass fraction of the compound of Formula (I) in the solvent is $W_1$. The mass fraction $W_1$ of the compound of Formula (I) and the lithium-ion diffusion coefficient $D_s$ of the positive active material layer satisfy: $2\times10^{-18}$ cm$^2$/s $\leq W_1 \times D_s \leq 8\times10^{-6}$ cm$^2$/s, and optionally, $3\times10^{-14}$ cm$^2$/s $\leq W_1 \times D_s \leq 7\times10^{-10}$ cm$^2$/s.

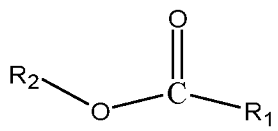

(I)

In the formula above, $R_1$ and $R_2$ each independently include at least one of a $C_1$ to $C_3$ alkyl or a $C_1$ to $C_3$ haloalkyl.

In this embodiment of this application, the compound represented by Formula (I) serving as a solvent or a part of a solvent endows the electrolyte solution with a relatively high conductivity. During charge of the lithium secondary battery, lithium ions are deintercalated from the positive active material, move to the surface of the negative active material layer through the electrolyte solution, and then are intercalated into the negative active material. Based on the lithium-ion diffusion coefficient $D_s$ of the positive electrode material in the lithium secondary battery, by controlling the mass percent of the compound represented by Formula (I), this application can effectively improve the transmission rate of lithium ions in the electrolyte solution, and enable the electrolyte solution to transmit a large amount of lithium ions deintercalated from the positive active material to the negative electrode in time, thereby improving the fast-charge performance of the lithium secondary battery.

In some embodiments, $R_1$ and $R_2$ each independently include at least one of methyl, ethyl, propyl, fluoromethyl, fluoroethyl, or fluoropropyl.

In some embodiments, $10^{-16}$ cm$^2$/s $\leq D_s \leq 10^{-5}$ cm$^2$/s, and optionally, $10^{-11}$ cm$^2$/s $\leq D_s \leq 10^{-9}$ cm$^2$/s.

In some embodiments, 20% ≤ $W_1$ ≤ 80%, and optionally, 30% ≤ $W_1$ ≤ 70%.

In some embodiments, the compound of Formula (I) includes at least one of the following compounds:

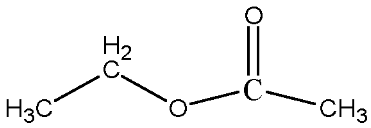
(I-I)

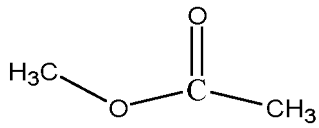
(I-II)

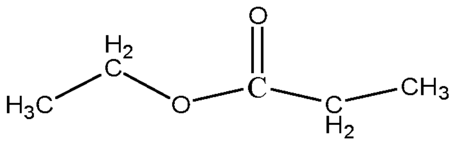
(I-III)

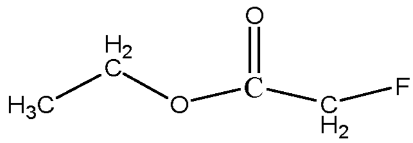
(I-IV)

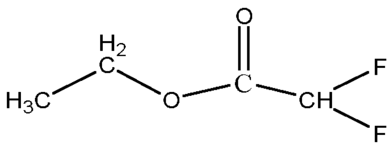
(I-V)

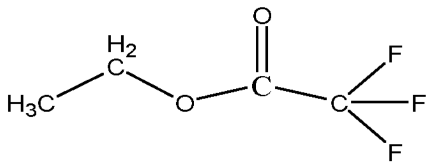
(I-VI)

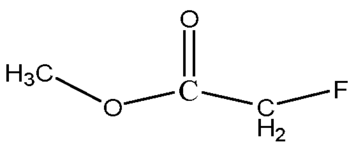
(I-VII)

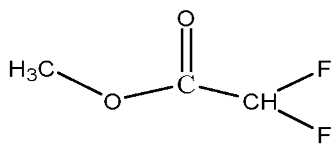
(I-VIII)

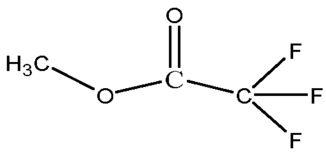
(I-IX)

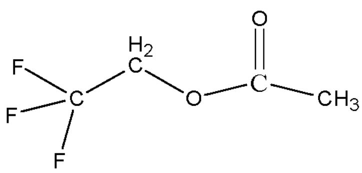
(I-X)

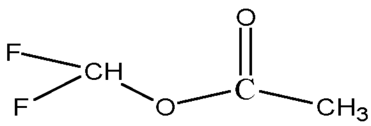
(I-XI)

Optionally, the compounds of Formula (I) include at least one of the compound of Formula (II), the compound of Formula (I-II), the compound of Formula (IV), and the compound of Formula (I-VIII).

In some embodiments, the electrolyte solution includes a first additive. The first additive includes at least one of compounds of Formula (II):

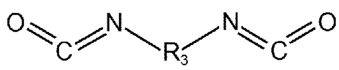
(II)

In the formula above, $R_3$ includes at least one of an Ra-substituted or unsubstituted $C_2$ to $C_{10}$ alkylene, an Ra-substituted or unsubstituted $C_2$ to $C_{10}$ heteroalkylene, an Ra-substituted or unsubstituted $C_6$ to $C_{18}$ arylene, an Ra-substituted or unsubstituted $C_6$ to $C_{18}$ heteroarylene, an Ra-substituted or unsubstituted $C_3$ to $C_{18}$ alicyclylene, or an Ra-substituted or unsubstituted $C_3$ to $C_{18}$ heteroalicyclylene; and Ra includes at least one of a halogen atom, a cyano group, an isocyanate ester group, a hydroxyl group, a carboxyl group, a sulfonic acid group, an ester group, a $C_2$ to $C_{10}$ alkyl, a $C_2$ to $C_{10}$ alkenyl, a $C_2$ to $C_{10}$ alkynyl, or a $C_2$ to $C_{10}$ oxaalkyl.

In these embodiments of this application, by introducing the first additive into the electrolyte solution, this application forms a protective Solid Electrolyte Interface (SEI) film on the surface of the negative active material layer of the

lithium secondary battery, thereby effectively improving the stability of the solid-liquid interface between the negative electrode and the electrolyte solution, alleviating the problem of gas generation at the interface between the negative active material layer and the electrolyte solution during the fast charge of the lithium secondary battery, and in turn, improving the cycle performance of the lithium secondary battery.

In some embodiments, a mass fraction of the first additive in the electrolyte solution is $W_2$, and the $W_2$, the $W_1$, and the $D_s$ satisfy: $2\times10^{-22}$ cm$^2$/s $\leq W_2 \times W_1 \times D_s \leq 1.6\times10^{-6}$ cm$^2$/s, optionally $2\times10^{-21}$ cm$^2$/s $\leq W_2 \times W_1 \times D_s \leq 8\times10^{-7}$ cm$^2$/s, and optionally $4\times10^{-21}$ cm$^2$/s $\leq W_2 \times W_1 \times D_s \leq 4\times10^{-7}$ cm$^2$/s.

In some embodiments, $W_2$ satisfies: $0.01\% \leq W_2 \leq 20\%$, optionally $0.1\% \leq W_2 \leq 10\%$, and optionally $0.2\% \leq W_2 \leq 5\%$.

In some embodiments, the first additive includes at least one of the following compounds:

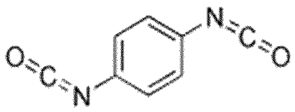
(II-I)

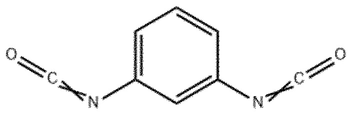
(II-II)

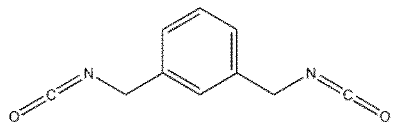
(II-III)

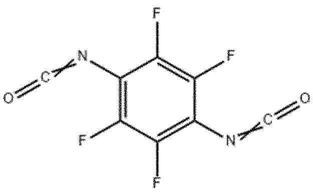
(II-IV)

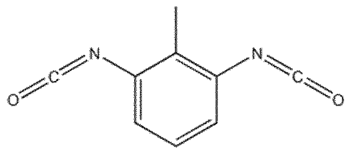
(II-V)

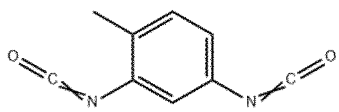
(II-VI)

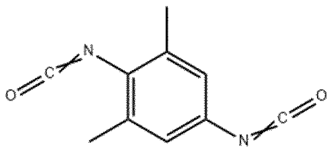
(II-VII)

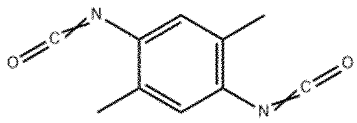
(II-VIII)

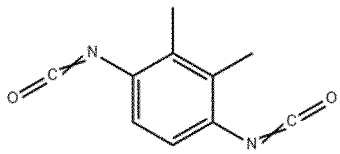
(II-IX)

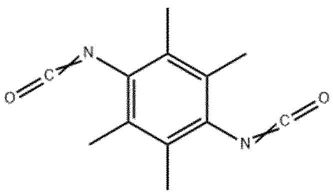
(II-X)

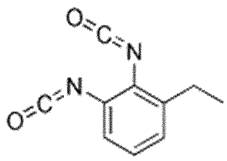
(II-XI)

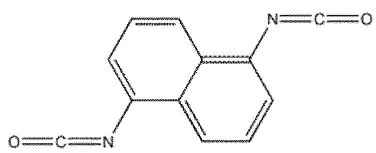
(II-XII)

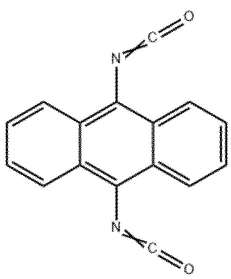
(II-XIII)

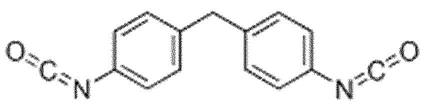
(II-XIV)

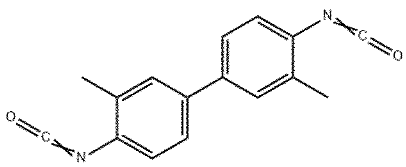
(II-XV)

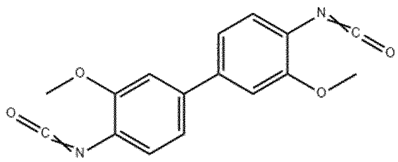
(II-XVI)
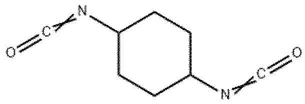
(II-XVII)
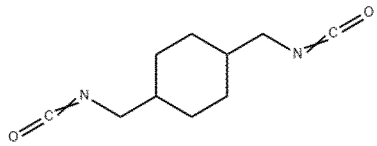
(II-XVIII)

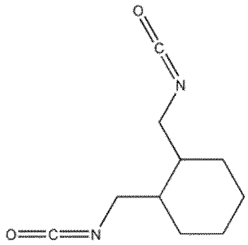
(II-XIX)
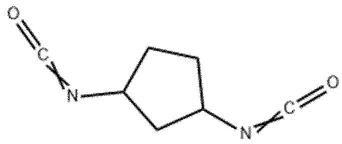
(II-XX)
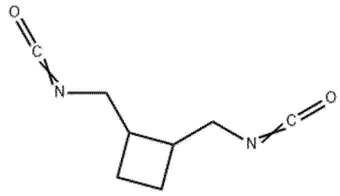
(II-XXI)

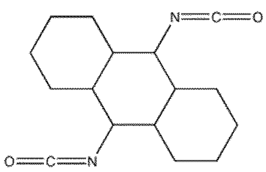
(II-XXII)
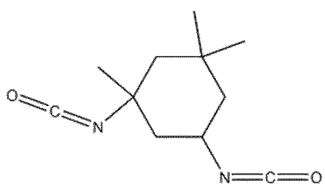
(II-XXIII)
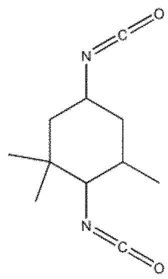
(II-XXIV)

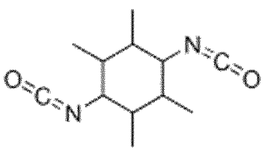
(II-XXV)
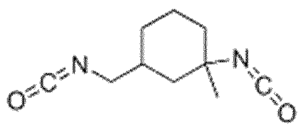
(II-XXVI)
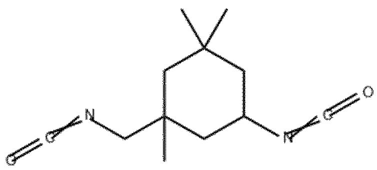
(II-XXVII)

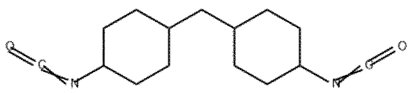
(II-XXVIII)
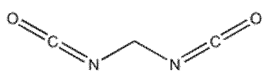
(II-XXIX)
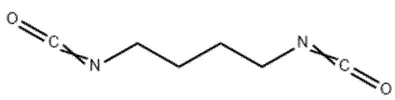
(II-XXX)

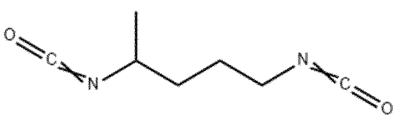
(II-XXXI)
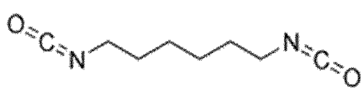
(II-XXXII).

In some embodiments, the electrolyte solution includes a second additive. The second additive includes at least one of $M^{a+}[F_wPO_t]^{b-}$, $M^{a+}[BF_4]^{b-}$, $M^{a+}[FSO_3]^{b-}$, or a compound of Formula (III):

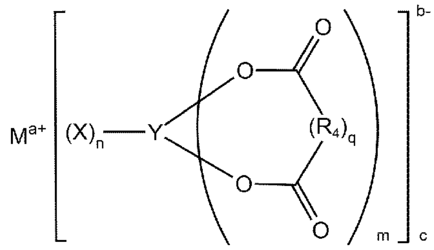

(III)

In the formula above, $M^{a+}$ includes at least one of a lithium ion, a sodium ion, a potassium ion, a rubidium ion, a cesium ion, a magnesium ion, a calcium ion, a barium ion, an aluminum ion, an iron ion, a copper ion, a nickel ion, or an organic cation, and a, b, and c each represent a natural number; t represents an integer from 0 to 3, and w represents an integer from 1 to 6; X includes a halogen atom, and n represents an integer from 0 to 4; Y includes at least one of a boron atom or a phosphorus atom; $R_4$ includes a substituted or unsubstituted $C_1$ to $C_{10}$ alkylene, a substituted or unsubstituted $C_1$ to $C_{10}$ haloalkylene, a substituted or unsubstituted $C_6$ to $C_{20}$ arylene, a substituted or unsubstituted $C_6$ to $C_{20}$ haloarylene, q represents an integer from 0 to 1, and m represents an integer from 1 to 3.

In these embodiments of this application, by introducing the second additive into the electrolyte solution, this application facilitates formation of an SEI film on the surface of the negative active material layer, thereby further improving the stability of the solid-liquid interface between the negative electrode and the electrolyte solution, and in turn, further improving the cycle performance of the lithium secondary battery.

In some embodiments, a mass fraction of the second additive in the electrolyte solution is $W_3$. The $W_3$, the $W_1$, and the $D_s$ satisfy: $2\times10^{-22}$ cm$^2$/s $\le W_3 \times W_1 \times D_s \le 1.6\times10^{-6}$ cm$^2$/s, optionally $2\times10^{-21}$ cm$^2$/s $\le W_3 \times W_1 \times D_s \le 8\times10^{-7}$ cm$^2$/s, and optionally $4\times10^{-21}$ cm$^2$/s $\le W_3 \times W_1 \times D_s \le 4\times10^{-7}$ cm$^2$/s.

In some embodiments, $0.01\% \le W_3 \le 20\%$, optionally $0.1\% \le W_3 \le 10\%$, and optionally $0.2\% \le W_3 \le 5\%$.

In some embodiments, in $M^{a+}[FSO_3]^{b-}$, $M^{a+}$ includes at least one of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Cu^{2+}$, $Fe^{3+}$, $Ni^{2+}$, or $Ni^{3+}$.

In some embodiments, the positive active material layer includes a first positive active material and a second positive active material. An average particle diameter $Dv50_1$ of the first positive active material satisfies: 8 μm $\le Dv50_1 \le$ 50 μm; and an average particle diameter $Dv50_2$ of the second positive active material satisfies: 0.02 μm $\le Dv50_2 \le$ 8 μm.

In these embodiments of this application, by combining the first active material with a relatively large (volume) median diameter with the second active material with a relatively small (volume) median diameter, this application increases the powder compaction density of the positive electrode plate, thereby increasing the energy density of the lithium secondary battery.

In some embodiments, a mass percent $W_4$ of the second positive active material in the positive active material layer satisfies: $0\% \le W_4 \le 60\%$, and optionally $20\% \le W_4 \le 40\%$.

In some embodiments, the lithium secondary battery includes a negative electrode plate. The negative electrode plate includes a negative current collector and a negative active material layer disposed on the negative current collector. The negative active material layer includes a negative active material. An average particle diameter $Dv50_3$ of the negative active material satisfies: 6 μm $\le Dv50_3$, and optionally 15 μm $\le Dv50_3 \le$ 20 μm.

In these embodiments of this application, by setting the (volume) median diameter of the negative active material to a value within an appropriate range, after the first additive and/or the second additive forms an SEI film of a specified thickness on the surface of the negative active material layer, the volume median diameter of the superficial negative active material is increased, and the specific surface area is decreased, thereby reducing the contact area between the superficial negative active material and the electrolyte solution, and in turn, reducing the probability of side reactions of the electrolyte solution on the surface of the negative active material layer, and improving the cycle performance of the lithium secondary battery.

In some embodiments, a specific surface area of the negative active material satisfies: 0.5 m$^2$/g $\le$ BET $\le$ 2.0 m$^2$/g, and optionally 0.8 m$^2$/g $\le$ BET $\le$ 1.5 m$^2$/g.

In these embodiments of this application, by setting the specific surface area of the negative active material to a value within an appropriate range, after the first additive and/or the second additive forms an SEI film of a specified thickness on the surface of the negative active material layer, the specific surface area of the superficial negative active material is decreased, thereby reducing the contact area between the negative active material and the electrolyte solution, reducing the probability of side reactions of the electrolyte solution on the surface of the negative active material layer, and improving the cycle performance of the lithium secondary battery.

According to a second aspect, an electrical device is provided. The electrical device includes the lithium secondary battery disclosed in any embodiment of the first aspect.

Therefore, the lithium secondary battery disclosed herein exhibits good fast-charge performance and cycle

performance, and the electrical device disclosed herein can be fast-charged efficiently and is endowed with a relatively long service life.

## BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts. The drawings are not drawn to scale.

FIG. 1 is a schematic diagram of a secondary battery according to this application;
FIG. 2 is a schematic structural diagram of a secondary battery according to this application;
FIG. 3 is a schematic structural diagram of a battery module according to this application;
FIG. 4 is a schematic diagram of a battery pack according to this application;
FIG. 5 is a schematic structural diagram of a battery pack according to this application; and
FIG. 6 is a schematic diagram of an electrical device according to this application.

## DETAILED DESCRIPTION

The following discloses and describes in detail a lithium secondary battery and an electrical device according to some embodiments of this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

In the description of this application, unless otherwise specified, "a plurality of" means at least two in number; the terms such as "up", "down", "left", "right", "in", and "out" indicating a direction or a position relationship are merely intended for ease or brevity of description of this application, but do not indicate or imply that the mentioned device or component is necessarily located in the specified direction and position or constructed or operated in the specified direction and position. Therefore, such terms are not to be understood as a limitation on this application. In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified, the term "or" used herein is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and

so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise specified, the following terms have the following meanings. Any undefined terms have the technical meaning that is generally accepted.

The term "alkyl" bears the usual meaning, and means a monovalent saturated hydrocarbon group with one or more carbon atoms, optionally 1 to 3 carbon atoms. For example, alkyls include linear and branched hydrocarbon groups, such as methyl, ethyl, n-propyl, and isopropyl.

The term "haloalkyl" bears the usual meaning and means an alkyl group in which one or more hydrogen atoms in the bonds of one or more carbon atoms in a linear, branched, or cyclic framework are substituted by halogen atoms. For example, haloalkyls include monochloromethyl, monofluoromethyl, trifluoromethyl, monofluoroethyl, monofluoropropyl, and the like.

The term "alkylene" bears the usual meaning, and means a divalent hydrocarbon group with one or more carbon atoms, optionally 1 to 10 carbon atoms. For example, alkylenes include divalent linear hydrocarbon groups and divalent branched hydrocarbon groups, such as ethylene, methylethylene, n-propylene, and the like.

The term "Ra-substituted alkylene" means an alkylene in which one or more hydrogen atoms in the bonds of one or more carbon atoms in a linear, branched, or cyclic framework are substituted by Ra.

The term "heteroalkylene" bears the usual meaning and means an alkylene in which one or more carbon atoms in a linear, branched, or cyclic framework each are independently substituted by the same or different heteroatoms or groups. The heteroatoms or groups include, but are not limited to, halogen atoms, oxygen atoms, sulfur atoms, peroxy groups, perthio groups, thiooxy groups, phenyl groups, and the like.

The term "Ra-substituted heteroalkylene" means a heteroalkylene in which one or more hydrogen atoms in the bonds of one or more carbon atoms in a linear, branched, or cyclic framework are substituted by Ra.

The term "arylene" bears the usual meaning and means a divalent aryl group derived by removing one hydrogen atom from the carbon-hydrogen bond of each of two different carbon atoms in an aromatic compound or removing two hydrogen atoms from the carbon-hydrogen bond of one carbon atom in an aromatic compound.

The term "Ra-substituted arylene" means an arylene in which one or more hydrogen atoms in the bonds of one or more carbon atoms in a linear, branched, or cyclic framework are substituted by Ra.

The term "heteroarylene" bears the usual meaning and means an arylene in which one or more carbon atoms each are independently substituted by the same or different heteroatoms or groups.

The term "Ra-substituted heteroarylene" means a heteroarylene in which one or more hydrogen atoms in the bonds of one or more carbon atoms in a linear, branched, or cyclic framework are substituted by Ra.

The term "alicyclylene" bears the usual meaning and means a divalent alicyclic group derived by removing two hydrogen atoms from an alicyclic hydrocarbon molecule.

The term "Ra-substituted alicyclylene" means an alicyclylene in which one or more hydrogen atoms in the bonds of one or more carbon atoms in a linear, branched, or cyclic framework are substituted by Ra.

The term "heteroalicyclylene" bears the usual meaning and means a heteroalicyclylene in which one or more carbon atoms in a linear, branched, or cyclic framework each are independently substituted by the same or different heteroatoms or groups.

The term "Ra-substituted alicyclylene" means a heteroalicyclylene in which one or more hydrogen atoms in the bonds of one or more carbon atoms in a linear, branched, or cyclic framework are substituted by Ra.

The term "halogen atom" bears the usual meaning and means a fluorine atom, a chlorine atom, a bromine atom, an iodine atom, and an astatine atom.

The term "alkenyl" bears the usual meaning and means a hydrocarbon group containing one or more carbon atoms and containing at least one double-bond unsaturated site. Optionally, the number of carbon atoms in an alkenyl is 2 to 10. For example, alkenyls include linear alkenyls and branched alkenyls. Examples of alkenyls include vinyl, propenyl, n-butenyl, and the like. In some other examples, alkenyls also include cyclic alkenyl, bicycloalkenyl, and the like. For example, a type of alkenyl is cyclohexyl.

The term "alkynyl" bears the usual meaning and means a hydrocarbon group containing one or more carbon-carbon triple bonds. Optionally, the number of carbon atoms in an alkenyl is 2 to 10. For example, a type of alkynyl is ethynyl.

The term "oxaalkyl" bears the usual meaning and means an alkyl group in which one or more carbon atoms in a linear, branched, or cyclic framework are substituted by oxygen atoms.

The term "substituted alkylene" bears the usual meaning and means an alkylene in which one or more hydrogen atoms in the bonds of one or more carbon atoms in a linear, branched, or cyclic framework are substituted by the same or different heteroatoms or groups.

The term "haloalkylene" bears the usual meaning and means an alkylene in which one or more hydrogen atoms in the bonds of one or more carbon atoms in a linear, branched, or cyclic framework are substituted by the same or different halogen atoms.

The term "substituted haloalkylene" bears the usual meaning and means a haloalkylene in which one or more hydrogen atoms in the bonds of one or more carbon atoms in a linear, branched, or cyclic framework are substituted by the same or different heteroatoms or groups.

The term "substituted arylene" means an arylene in which one or more hydrogen atoms in the bonds of one or more carbon atoms in a linear, branched, or cyclic framework are substituted by the same or different heteroatoms or groups.

The term "haloarylene" means an arylene in which one or more hydrogen atoms in the bonds of one or more carbon atoms in a linear, branched, or cyclic framework are substituted by the same or different halogen atoms or groups.

The term "substituted haloarylene" means a haloarylene in which one or more hydrogen atoms in the bonds of one or more carbon atoms in a linear, branched, or cyclic framework are substituted by the same or different heteroatoms or groups.

The term "lithium-ion diffusion coefficient" means the average number of lithium ions passing through a unit area of a medium per unit time, and represents the penetration rate of lithium ions in the medium. The diffusion process of lithium ions in a solid phase includes diffusion based on a vacancy mechanism in ionic crystals, diffusion caused by a concentration gradient, and diffusion caused by chemical potential. In some embodiments of this application, the lithium-ion diffusion coefficient may also be expressed by a chemical diffusion coefficient of lithium ions. The chemical diffusion coefficient covers a variety of diffusion processes mentioned above.

In some embodiments of this application, a particle size distribution reflects the (volume) median diameter of a material.

The term "Dv50" means a particle diameter corresponding to a point at which the cumulative volume percent reaches 50% in a volume-based particle size distribution curve of sample particles of a material. The physical meaning of this term is that the number of particles larger or smaller than this particle diameter is 50% of the total number of the sample particles in the material. The digit "1" in "$Dv50_1$" is a subscript that indicates the Dv50 of one specified material different from the Dv50 of other material without any additional restrictive meaning.

The following describes some embodiments of this application.

In recent years, by virtue of high energy density and longevity, secondary batteries have been widely used in electric tools, electronic products, electric vehicles, aerospace, and other fields, and have achieved significant development. Generally, a secondary battery includes a positive electrode plate, a negative electrode plate, an electrolyte solution, and a separation piece. During charge and discharge of a battery, active ions are shuttled between the positive electrode plate and the negative electrode plate by intercalation and deintercalation. The electrolyte solution serves to conduct active ions between the positive electrode plate and the negative electrode plate. Disposed between the positive electrode plate and the negative electrode plate, the separation piece allows active ions to pass through while preventing a short circuit between the positive electrode and the negative electrode, thereby facilitating a normal process of electrochemical reaction in the secondary battery.

Using a lithium secondary battery as an example, the lithium secondary battery is a typical secondary battery. Because the lithium secondary battery is charged and discharged by virtue of chemical reactions of lithium ions intercalated and deintercalated between a positive electrode and a negative electrode, the lithium secondary battery is also called a rocking chair battery. During charge of a lithium secondary battery, lithium ions are deintercalated from a positive active material, pass through an electrolyte solution, move to the negative electrode, and are intercalated into a negative active material. During discharge, the lithium ions are deintercalated from the negative active material, pass through the electrolyte solution, move to the positive electrode, and are intercalated into the positive active material.

Understandably, the terms "lithiation" and "intercalation" referred to herein mean a process by which the lithium ions are inserted into the positive active material or the negative active material due to electrochemical reactions. The terms "extracting", "delithiation", and "deintercalation" referred to herein mean a process by which the lithium ions are extracted from the positive active material or the negative active material due to electrochemical reactions.

With the lithium secondary batteries being applied more and more extensively, the requirements for the performance of lithium secondary batteries in different fields are also increasingly higher. For example, in the field of electric vehicles, the lithium secondary batteries are required to exhibit a high energy density and fast-charge capabilities. As mentioned above, during charge of a lithium secondary battery, lithium ions are deintercalated from the positive active material, pass through the electrolyte solution, move to the negative electrode, and are intercalated into the negative active material. On the one hand, in order to achieve a high energy density, a larger amount of positive and negative active materials need to be loaded on the positive and negative electrode plates, so that the positive and negative active material layers of the electrode plates are thicker than those of an ordinary lithium secondary battery. Using the positive electrode plate as an example, in order to ensure that the lithium ions in the positive active material away from the surface of the positive active material layer can be smoothly deintercalated, the lithium ion diffusion coefficient of the positive active

material layer is usually large. On the other hand, the positive active material layer and the electrolyte solution differ in the ability to conduct lithium ions. Generally, the lithium-ion diffusion coefficient of lithium ions in the positive active material layer (solid phase) is greater than the lithium-ion diffusion coefficient of lithium ions in the electrolyte solution (liquid phase). The mismatch between the solid-phase diffusion coefficient and the liquid-phase diffusion coefficient of lithium ions results in the following consequence: a large number of lithium ions deintercalated from the positive active material during the fast charge of the lithium secondary battery are unable to be transferred to the negative electrode in time due to the limited lithium-ion conductivity of the electrolyte solution, thereby bottlenecking the fast-charge performance of the lithium secondary battery.

In view of this, an embodiment of this application provides a lithium secondary battery. In the lithium secondary, the solvent in the electrolyte solution includes a linear carboxylate ester compound represented by Formula (I). The compound represented by Formula (I) possesses a relatively large dielectric constant and a relatively low viscosity, thereby improving the ability of the electrolyte solution to conduct lithium ions. In addition, in the lithium secondary battery, the mass fraction of the compound represented by Formula (I) is regulated within an appropriate range based on the lithium-ion diffusion coefficient of the positive active material layer, so that the lithium secondary battery achieves a high energy density and good fast-charge performance.

In an embodiment of this application, a lithium secondary battery is provided. Generally, the lithium secondary battery includes a positive electrode plate, a negative electrode plate, an electrolyte solution, and a separation piece. Next, the lithium secondary battery provided herein and various parts of the lithium secondary battery are described below.

In an embodiment of this application, a lithium secondary battery is provided. The lithium secondary battery includes a positive electrode plate and an electrolyte solution.

The positive electrode plate includes a positive current collector and a positive active material layer disposed on at least one side of the positive current collector. A lithium-ion diffusion coefficient of the positive active material layer is $D_s$.

The electrolyte solution includes a solvent. The solvent includes at least one of compounds represented by Formula (I). The mass percent of the compound represented by Formula (I) in the electrolyte solution is $W_1$. The mass fraction $W_1$ of the compound represented by Formula (I) and the lithium-ion diffusion coefficient $D_s$ of the positive active material layer satisfy: $2\times 10^{-18}$ cm$^2$/s $\leq W_1 \times D_s \leq 8\times10^{-6}$ cm$^2$/s, and optionally, $3 \times 10^{-14}$ cm$^2$/s $\leq W_1 \times D_s \leq 7\times10^{-10}$ cm$^2$/s,

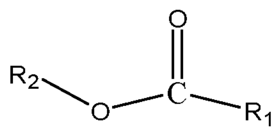

(I)

In the formula above, $R_1$ and $R_2$ each independently include at least one of a $C_1$ to $C_3$ alkyl or a $C_1$ to $C_3$ haloalkyl.

Specifically, $W_1\times D_s$ may be $2\times10^{-18}$ cm$^2$/s, $2\times10^{-17}$ cm$^2$fs, $2\times10^{-16}$ cm$^2$/s, $2\times10^{-15}$ cm$^2$/s, $2\times10^{-14}$ cm$^2$/s, $3\times10^{-14}$ cm$^2$/s, $2\times 10^{-12}$ cm$^2$/s, $2\times10^{-11}$ cm$^2$/s, $7\times 10^{-10}$ cm$^2$/s, $2\times10^{-9}$ cm$^2$/s, $2\times10^{-8}$ cm$^2$/s, $2\times10^{-7}$ cm$^2$/s, $8\times10^{-6}$ cm$^2$/s, or a value falling within a range formed by any two thereof.

In this embodiment, the lithium secondary battery includes a positive active material layer and an electrolyte solution doped with the positive active material layer, where the lithium-ion diffusion coefficient of the positive active material layer is $D_s$. The solvent in the electrolyte solution includes the compound represented by Formula (I). In this way, the electrolyte solution is of relatively high conductivity. The mass fraction $W_1$ of the compound in the electrolyte solution is regulated based on the lithium-ion diffusion coefficient $D_s$ of the positive active material layer, so that the product of the lithium-ion diffusion coefficient and the mass fraction falls within an appropriate range, thereby alleviating the problem of mismatch of lithium-ion diffusion capability between the positive active material layer and the electrolyte solution in the lithium secondary battery, and improving the fast-charge capability of the lithium secondary battery while achieving a high energy density of the lithium secondary battery.

The lithium-ion diffusion coefficient $D_s$ of the positive active material is related to factors such as the particle size of the positive active material, the morphology of the positive active material, and the ion conductivity of the positive active material. The lithium-ion diffusion coefficient $D_s$ of the positive active material may be regulated by regulating the particle diameter of the positive active material, changing the morphology of the positive active material, or other means.

As an example, the lithium-ion diffusion coefficient $D_s$ of the positive active material may be regulated by the following method: adding the raw materials $Li_2CO_3$, $H_3PO_4$, and $FeCl_2\cdot4H_2O$ into anhydrous ethanol at a molar ratio of 1: 1: 1, stirring the mixture well until completion of reaction of the raw materials so that the sol is immediately converted into a gray gel. Leaving the gray gel to stand at room temperature, and transferring the gray gel into an 80 °C blast air oven to undergo drying for 12 hours. Subsequently, putting the dried gel into an aluminum oxide crucible, and moving the crucible into a tubular atmosphere furnace to undergo heat-treatment in an argon atmosphere. The heat treatment may be

performed by a two-step calcination method, namely, pre-calcination and final calcination. The heat treatment condition for pre-calcination is: 350°C kept for 5 hours. The heat treatment condition for final calcination is: 500 °C to 800 °C kept for 10 to 25 hours. To regulate the lithium-ion diffusion coefficient $D_s$, an appropriate amount (for example, 0 mol, 0.2 mol, 0.5 mol, 1 mol, or 2 mol) of citric acid may be added into the sol after completion of reaction of the raw materials, and the stirring time may be increased to 3 hours. By adding citric acid into the sol obtained after completion of reaction of the raw materials, the amorphous carbon obtained by the pyrolysis of the citric acid can coat the surface of the particles during the subsequent calcination. The carbon coating layer restricts the reactants from further diffusing, and exerts a steric hindrance effect, thereby reducing the growth rate of crystals. The introduced carbon is conducive to downsizing the grains. Therefore, by regulating the amount of citric acid added, the positive electrode materials of different particle sizes can be obtained, and then the positive electrode materials of different lithium-ion diffusion coefficients can be obtained. The lithium-ion diffusion coefficient $D_s$ may be directly determined by a galvanostatic intermittent titration technique (GITT) in which a constant-current pulse is applied.

In an embodiment of this application, the solvent may include solely the compound of Formula (I). When the solvent includes solely the compound of Formula (I), the electrolyte solution is of high conductivity and fluidity by virtue of the high conductivity and low viscosity of the compound of Formula (I), thereby also alleviating the problem of mismatch of lithium-ion diffusion capability between the positive active material layer and the electrolyte solution in the lithium secondary battery, and improving the fast-charge capability of the lithium secondary battery while achieving a high energy density of the lithium secondary battery.

Optionally, $R_1$ and $R_2$ each independently include at least one of methyl, ethyl, propyl, fluoromethyl, fluoroethyl, or fluoropropyl.

Optionally, the compound of Formula (I) includes at least one of the following compounds:

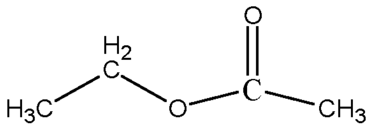

(I-I)

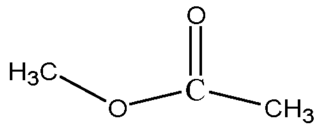

(I-II)

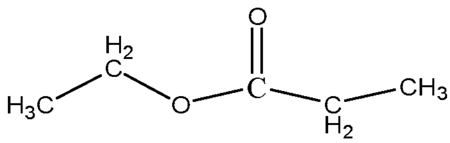

(I-III)

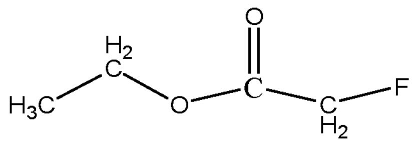

(I-IV)

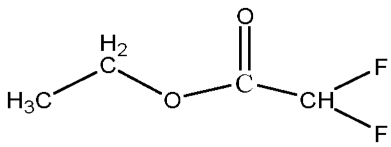

(I-V)

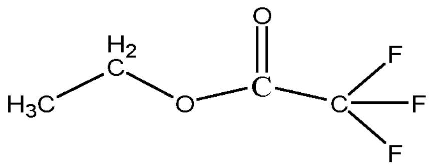

(I-VI)

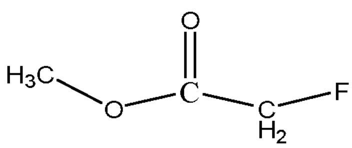

(I-VII)

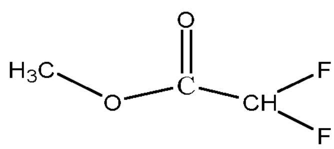

(I-VIII)

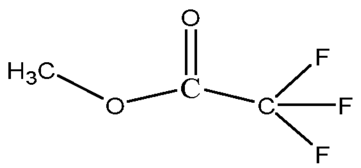

(I-IX)

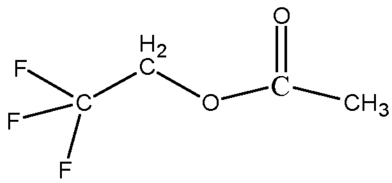

(I-X)

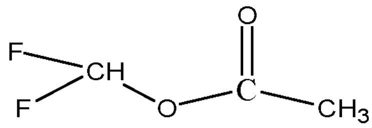

(I-XI)

Optionally, the compounds of Formula (I) include at least one of the compound of Formula (II), the compound of Formula (I-II), the compound of Formula (IV), and the compound of Formula (I-VIII).

The following describes the positive electrode plate and the electrolyte solution in the lithium secondary battery in detail.

**[Electrolyte solution]**

The electrolyte solution serves to conduct lithium ions between the positive electrode plate and the negative electrode plate. The electrolyte solution includes a solute and a solvent. The solute is dissolved in the solvent to form a homogeneous electrolyte solution.

In the lithium secondary battery disclosed herein, the solvent of the electrolyte solution includes the compound represented by Formula (I).

Optionally, the mass fraction $W_1$ of the compound represented by Formula (I) in the electrolyte solution is positively correlated to the lithium-ion diffusion coefficient $D_s$ of the positive active material layer.

Specifically, with a larger amount of positive active material applied, the positive active material of a larger lithium-ion diffusion coefficient $D_s$ needs to be selected, and the mass fraction of the compound represented by Formula (I) needs to be higher to improve the lithium-ion conductivity of the electrolyte solution to a level that matches the lithium-ion conductivity of the positive active material layer.

Optionally, the mass fraction $W_1$ of the compound represented by Formula (I) in the electrolyte solution satisfies: $20\% \leq W_1 \leq 80\%$, and optionally, $30\% \leq W_1 \leq 70\%$.

Specifically, $W_1$ may be 20%, 25%, 30%, 35%, 40%, 45%, 50%, 55%, 60%, 65%, 70%, 75%, 80%, or a value falling within a range formed by any two thereof.

Optionally, in some other embodiments, the solvent may further include at least one of ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

Optionally, the solute in the electrolyte solution includes at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, or lithium tetrafluoro(oxalato)phosphate.

Optionally, the electrolyte solution includes a first additive. The first additive includes at least one of compounds of Formula (II):

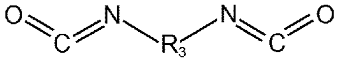

(II)

In the formula above, $R_3$ includes at least one of an Ra-substituted or unsubstituted $C_2$ to $C_{10}$ alkylene, an Ra-substituted or unsubstituted $C_2$ to $C_{10}$ heteroalkylene, an Ra-substituted or unsubstituted $C_6$ to $C_{18}$ arylene, an Ra-substituted or unsubstituted $C_6$ to $C_{18}$ heteroarylene, an Ra-substituted or unsubstituted $C_3$ to $C_{18}$ alicyclylene, or an Ra-substituted or unsubstituted $C_3$ to $C_{18}$ heteroalicyclylene.

Ra includes at least one of a halogen atom, a cyano group, an isocyanate ester group, a hydroxyl group, a carboxyl group, a sulfonic acid group, an ester group, a $C_2$ to $C_{10}$ alkyl, a $C_2$ to $C_{10}$ alkenyl, a $C_2$ to $C_{10}$ alkynyl, or a $C_2$ to $C_{10}$ oxaalkyl.

Specifically, the electrolyte solution may further include an additive such as the first additive. The first additive is a negative electrode film-forming additive, and can form a stable Solid Electrolyte Interface (SEI) film on the surface of the negative active material layer to reduce the direct contact between the negative active material and the electrolyte solution. The compound represented by Formula (I), added to the electrolyte solution as a solvent or as a part of the solvent, on the one hand, improve the lithium-ion conductivity of the electrolyte solution. On the other hand, the compound represented by Formula (I) may produce gas due to side reactions on the surface of the negative active material layer during the charge and discharge of the lithium secondary battery, thereby consuming the electrolyte solution in the lithium secondary battery and causing damage to the negative active material and the structure of the negative active material layer, and impairing the cycle performance and safety performance of the lithium secondary battery.

Therefore, in this embodiment, by introducing the first additive into the electrolyte solution, the negative active material layer can be effectively protected from direct contact with the electrolyte solution, thereby improving the stability of the solid-liquid interface between the negative active material layer and the electrolyte solution, and reducing the possibility that the compound represented by Formula (I) generates gas on the surface of the negative active material layer, and improving the cycle performance of the lithium secondary battery while achieving a high level of energy density and fast-charge performance of the lithium secondary battery.

Optionally, the first additive includes at least one of the following compounds:

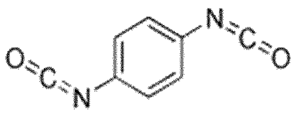

(II-I)

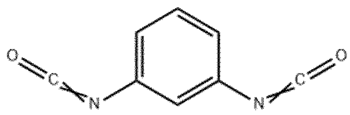

(II-II)

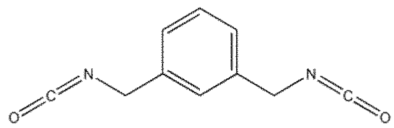

(II-III)

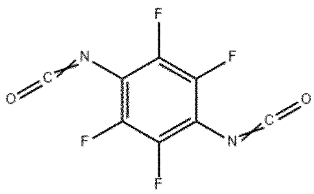

(II-IV)

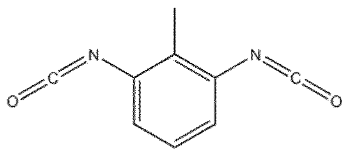

(II-V)

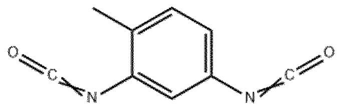

(II-VI)

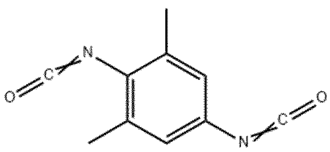

(II-VII)

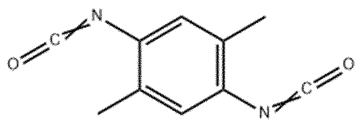

(II-VIII)

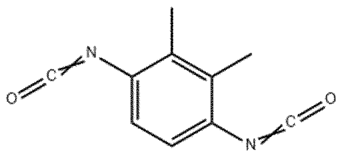

(II-IX)

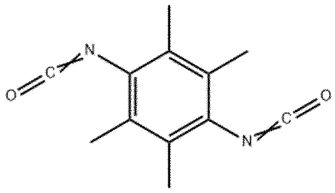

(II-X)

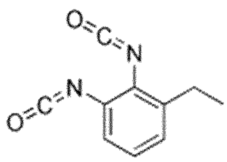

(II-XI)

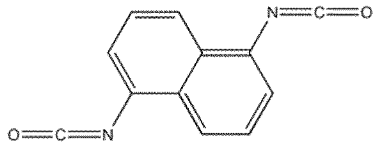

(II-XII)

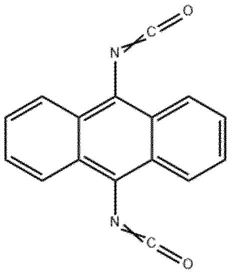

(II-XIII)

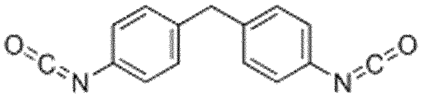

(II-XIV)

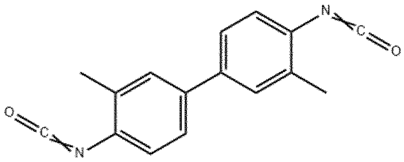

(II-XV)

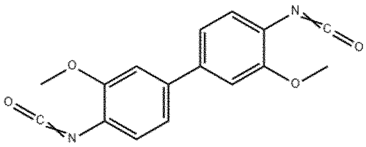

(II-XVI)

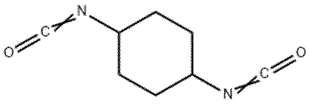

(II-XVII)

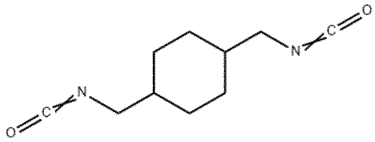

(II-XVIII)

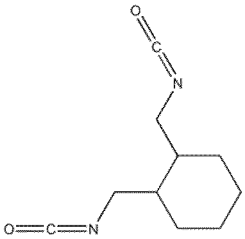

(II-XIX)

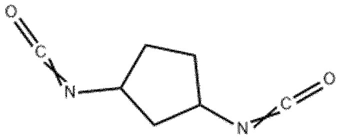

(II-XX)

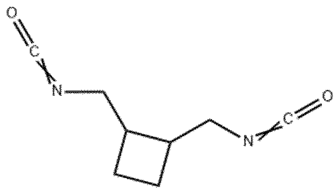

(II-XXI)

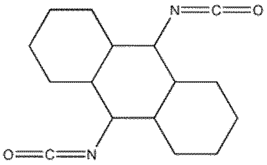

(II-XXII)

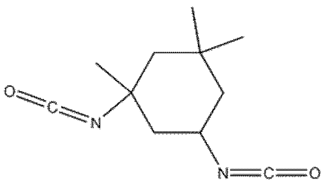

(II-XXIII)

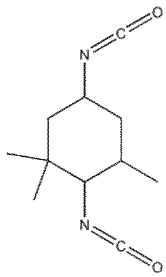

(II-XXIV)

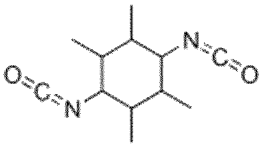

(II-XXV)

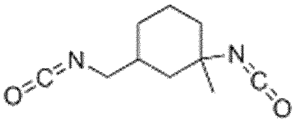

(II-XXVI)

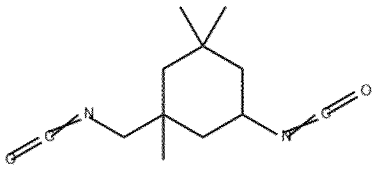

(II-XXVII)

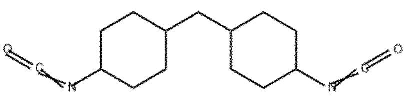

(II-XXVIII)

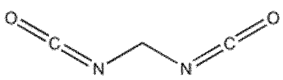

(II-XXIX)

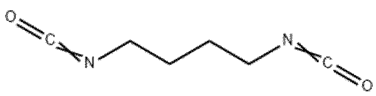

(II-XXX)

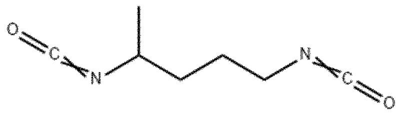

(II-XXXI)

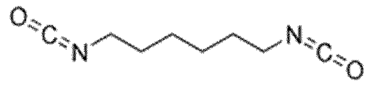

(II-XXXII).

Optionally, the mass fraction $W_2$ of the first additive in the electrolyte solution satisfies: $0.01\% \leq W_2 \leq 20\%$, optionally, $0.1\% \leq W_2 \leq 10\%$, and optionally, $0.2\% \leq W_2 \leq 5\%$.

Specifically, $W_2$ may be 0.01%, 0.02%, 0.03%, 0.04%, 0.05%, 0.06%, 0.07%, 0.08%, 0.09%, 0.1%, 0.2%, 0.3%, 0.4%, 0.5%, 0.6 %, 0.7%, 0.8%, 0.9%, 1%, 2%, 3%, 4%, 5%, 6%, 7%, 8%, 9%, 10%, 11%, 12%, 13%, 14%, 15%, 16%, 17%, 18%, 19%, 20%, or a value falling within a range formed by any two thereof.

Optionally, the mass fraction $W_2$ of the first additive in the electrolyte solution, the mass fraction $W_1$ of the compound represented by Formula (I) in the electrolyte solution, and the lithium-ion diffusion coefficient $D_s$ of the positive active material layer satisfy: $2\times10^{-22}$ $cm^2/s \leq W_2 \times W_1 \times D_s \leq 1.6\times10^{-6}$ $cm^2/s$, optionally $2\times10^{-21}$ $cm^2/s \leq W_2 \times W_1 \times D_s \leq 8\times10^{-7}$ $cm^2fs$, and optionally $4\times10^{-21}$ $cm^2/s \leq W_2 \times W_1 \times D_s \leq 4\times10^{-7}$ $cm^2/s$.

Specifically, $W_2\times W_1\times D_s$ may be $2\times10^{-22}$ $cm^2/s$, $2\times10^{-21}$ $cm^2/s$, $4\times10^{-21}$ $cm^2/s$, $2\times10^{-20}$ $cm^2/s$, $2\times10^{-19}$ $cm^2/s$, $2\times10^{-18}$ $cm^2/s$, $2\times10^{-17}$ $cm^2/s$, $2\times10^{-16}$ $cm^2/s$, $2\times10^{-15}$ $cm^2/s$, $2\times10^{-14}$ $cm^2/s$, $2\times10^{-13}$ $cm^2/s$, $2\times10^{-12}$ $cm^2/s$, $2\times10^{-11}$ $cm^2/s$, $2\times10^{-10}$ $cm^2/s$, $2\times10^{-9}$ $cm^2/s$, $2\times10^{-8}$ $cm^2/s$, $4\times10^{-7}$ $cm^2fs$, $8\times10^{-7}$ $cm^2fs$, $1.6\times10^{-6}$ $cm^2/s$, or a value falling within a range formed by any two thereof.

Optionally, the mass fraction $W_2$ of the first additive in the electrolyte solution is positively correlated to the mass fraction $W_1$ of the compound of Formula (I) in the electrolyte solution.

Specifically, with the increase of the content of the compound represented by Formula (I) in the electrolyte solution, the probability of gassing of the compound represented by Formula (I) on the surface of the negative active material layer increases. Therefore, a larger amount of first additive is required to form a film on the surface of the negative active material layer to reduce the possibility that the compound represented by Formula (I) generates gas through a reduction reaction on the surface of the negative active material layer.

Optionally, the electrolyte solution includes a second additive. The second additive includes at least one of $M^{a+}[F_wPO_t]^{b-}$, $M^{a+}[BF_4]^{b-}$, $M^{a+}[FSO_3]^{b-}$, or the compound of Formula (III):

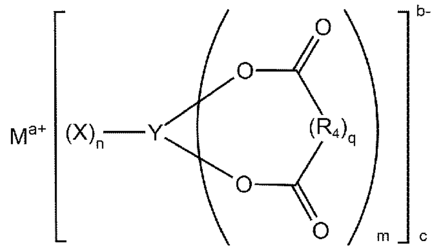

(III)

In the formula above, $M^{a+}$ includes at least one of a lithium ion, a sodium ion, a potassium ion, a rubidium ion, a cesium ion, a magnesium ion, a calcium ion, a barium ion, an aluminum ion, an iron ion, a copper ion, a nickel ion, or an organic cation, and a, b, and c each represent a natural number; t represents an integer from 0 to 3, and w represents an integer from 1 to 6; X includes a halogen atom, and n represents an integer from 0 to 4; Y includes at least one of a boron atom or a phosphorus atom; $R_4$ includes a substituted or unsubstituted $C_1$ to $C_{10}$ alkylene, a substituted or unsubstituted $C_1$ to $C_{10}$ haloalkylene, a substituted or unsubstituted $C_6$ to $C_{20}$ arylene, a substituted or unsubstituted $C_6$ to $C_{20}$ haloarylene, q represents an integer from 0 to 1, and m represents an integer from 1 to 3.

Specifically, the electrolyte solution may further include another negative electrode film-forming additive, that is, the second additive. The second additive can also form a stable SEI film on the surface of the negative active material layer, thereby isolating the electrolyte solution from the negative active material layer, protecting the negative active material, reducing the probability that the electrolyte solution generates gas on the surface of the negative active material layer, and further improving the cycle performance of the lithium secondary battery. In addition, the second additive exerts little impact on the impedance of the lithium secondary battery after the film formation, thereby reducing the probability of lithium plating that occurs due to excessive impedance during charge and discharge of the lithium secondary battery, and improving the charge and discharge performance of the battery.

Understandably, the electrolyte solution may include the first additive alone, the second additive alone, or both the first additive and the second additive. When the electrolyte solution includes both the first additive and the second additive, the first additive works in unison with the second additive to form an SEI film on the surface of the negative active

material layer, thereby producing a good film-forming effect and bringing little impact on the impedance of the lithium secondary battery.

Optionally, the mass fraction $W_3$ of the second additive in the electrolyte solution satisfies: $0.01\% \le W_3 \le 20\%$, optionally, $0.1\% \le W_3 \le 10\%$, and optionally, $0.2\% \le W_3 \le 5\%$.

Specifically, $W_3$ may be 0.01%, 0.02%, 0.03%, 0.04%, 0.05%, 0.06%, 0.07%, 0.08%, 0.09%, 0.1%, 0.2%, 0.3%, 0.4%, 0.5%, 0.6 %, 0.7%, 0.8%, 0.9%, 1%, 2%, 3%, 4%, 5%, 6%, 7%, 8%, 9%, 10%, 11%, 12%, 13%, 14%, 15%, 16%, 17%, 18%, 19%, 20%, or a value falling within a range formed by any two thereof.

Optionally, the mass fraction $W_3$ of the second additive in the electrolyte solution, the mass fraction $W_1$ of the compound represented by Formula (I) in the electrolyte solution, and the lithium-ion diffusion coefficient $D_s$ of the positive active material layer satisfy: $2\times10^{-22}$ cm$^2$/s $\le W_3 \times W_1 \times D_s \le 1.6\times10^{-6}$ cm$^2$/s, optionally $2\times10^{-21}$ cm$^2$/s $\le W_3 \times W_1 \times D_s \le 8\times10^{-7}$ cm$^2$/s, and optionally $4\times10^{-21}$ cm$^2$/s $\le W_3 \times W_1 \times D_s \le 4\times10^{-7}$ cm$^2$/s.

Specifically, $W_3\times W_1\times D_s$ may be $2\times10^{-22}$ cm$^2$/s, $2\times10^{-21}$ cm$^2$/s, $4\times10^{-21}$ cm$^2$/s, $2\times10^{-20}$ cm$^2$/s, $2\times10^{-19}$ cm$^2$/s, $2\times10^{-18}$ cm$^2$/s, $2\times10^{-17}$ cm$^2$/s, $2\times10^{-16}$ cm$^2$/s, $2\times10^{-15}$ cm$^2$/s, $2\times10^{-14}$ cm$^2$/s, $2\times10^{-13}$ cm$^2$/s, $2\times10^{-12}$ cm$^2$/s, $2\times10^{-11}$ cm$^2$/s, $2\times10^{-10}$ cm$^2$/s, $2\times10^{-9}$ cm$^2$/s, $2\times10^{-8}$ cm$^2$/s, $4\times10^{-7}$ cm$^2$fs, $8\times10^{-7}$ cm$^2$/s, $1.6\times10^{-6}$ cm$^2$/s, or a value falling within a range formed by any two thereof.

Optionally, the mass fraction $W_3$ of the second additive in the electrolyte solution is positively correlated to the mass fraction $W_1$ of the compound of Formula (I) in the electrolyte solution.

Similar to the case of the first additive, with the increase of the content of the compound represented by Formula (I) in the electrolyte solution, the probability of gassing of the compound represented by Formula (I) on the surface of the negative active material layer increases. Therefore, a larger amount of negative electrode film-forming additive is required to form a film on the surface of the negative active material layer to reduce the possibility that the compound represented by Formula (I) generates gas through a reduction reaction on the surface of the negative active material layer.

Optionally, in $M^{a+}[FSO_3]^{b-}$, $M^{a+}$ includes at least one of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Cu^{2+}$, $Fe^{3+}$, $Ni^{2+}$, or $Ni^{3+}$.

Optionally, the electrolyte solution may further include an additive capable of improving specified performance metrics of the battery, for example, an additive for improving overcharge performance of the battery, an additive for improving high- or low-temperature performance of the battery, or the like.

**[Positive electrode plate]**

A positive electrode plate includes a positive current collector and a positive active material layer disposed on at least one surface of the positive current collector.

As an example, the positive current collector includes two surfaces opposite to each other in a thickness direction of the current collector. The positive active material layer is disposed on one or both of the two opposite surfaces of the positive current collector.

Optionally, the positive current collector may be metal foil or a composite current collector. For example, the metal foil may be aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

Optionally, the positive active material layer may include a first positive active material and a second positive active material,

Optionally, the first positive active material may be a positive active material well-known in the art for use in a battery. As an example, the first positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. Of such positive active materials, one may be used alone, or at least two may be used in combination. Examples of the lithium transition metal oxide may include, but without being limited to, at least one of lithium cobalt oxide (such as $LiCoO_2$), lithium nickel oxide (such as $LiNiO_2$), lithium manganese oxide (such as $LiMnO_2$ and $LiMn_2O_4$), lithium nickel cobalt oxide, lithium manganese cobalt oxide, lithium nickel manganese oxide, lithium nickel cobalt manganese oxide (such as $LiNi_{1/3}Co_{1/3}Mn_{1/3}O_2$ (briefly referred to as NCM333), $LiNi_{o0.3}Co_{0.2}Mn_{0.3}O_2$ (briefly referred to as NCM523), $LiNi_{0.3}Co_{0.23}Mn_{0.23}O_2$ (briefly referred to as NCM211), $LiNi_{0.6}Co_{0.2}Mn_{0.2}O_2$ (briefly referred to as NCM622), $LiNi_{0.8}Co_{0.1}Mn_{0.1}O_2$ (briefly referred to as NCM811), lithium nickel cobalt aluminum oxide (such as $LiNi_{0.83}Co_{0.13}Al_{0.03}O_2$), or a modified compound thereof. Examples of the olivine-structured lithium-containing phosphate may include, but are not limited to, at least one of lithium iron phosphate (such as $LiFePO_4$, LFP for short), a composite of lithium iron phosphate and carbon, lithium manganese phosphate (such as $LiMnPO_4$), a composite of lithium manganese phosphate and carbon, lithium manganese iron phosphate, or a composite of lithium manganese iron phosphate and carbon.

Optionally, the (volume) median diameter $Dv50_1$ of the first positive active material satisfies: $8\ \mu m \leq Dv50_1 \leq 50\ \mu m$.

Specifically, $Dv50_1$ may be 8 μm, 10 μm, 15 μm, 20 μm, 25 μm, 30 μm, 35 μm, 40 μm, 45 μm, 50 μm, or a value falling within a range formed by any two thereof.

Optionally, the second positive active material may be a positive active material well-known in the art for use in a battery, as long as the (volume) median diameter of the second positive active material is smaller than the (volume) median diameter of the selected first positive active material. As an example, the second positive active material may include at least one of the following materials: olivine-structured lithium-containing phosphate, lithium transition metal oxide, and a modified compound thereof. Examples of the lithium transition metal oxide may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, or a modified compound thereof, or the like. Examples of the olivine-structured lithium-containing phosphate include, but are not limited to, at least one of lithium iron phosphate, a composite of lithium iron phosphate and carbon, lithium manganese phosphate, a composite of lithium manganese phosphate and carbon, lithium manganese iron phosphate, or a composite of lithium manganese iron phosphate and carbon. Of such positive active materials, one may be used alone, or at least two may be used in combination.

Optionally, the (volume) median diameter $Dv50_2$ of the second positive active material satisfies: $0.02\ \mu m \leq Dv50_2 \leq 8\ \mu m$.

Specifically, $Dv50_2$ may be 0.02 μm, 0.04 μm, 0.06 μm, 0.08 μm, 0.1 μm, 0.5 μm, 1 μm, 2 μm, 4 μm, 6 μm, 8 μm, or a value falling within a range formed by any two thereof.

Optionally, the mass percent $W_4$ of the second positive active material in the positive active material layer satisfies: $0\% \leq W_4 \leq 60\%$, and further optionally $20\% \leq W_4 \leq 40\%$.

Specifically, $W_4$ may be 0%, 2%, 4%, 6%, 8%, 10%, 12%, 14%, 16%, 18%, 20%, 25%, 30%, 40%, 50%, 60%, or a value falling within a range formed by any two thereof.

Understandably, the first positive active material and the second positive active material may be active materials of the same type. For example, the first positive active material is lithium iron phosphate with a volume median diameter of a micrometer scale, and the second positive active material is lithium iron phosphate with a volume median diameter of a nanoscale. Alternatively, the first positive active material and the second positive active material are active materials of different types. For example, the first positive active material is lithium iron phosphate with a volume median diameter of a micrometer scale, and the second positive active material is lithium iron manganese phosphate with a volume median diameter of a nanoscale.

In this embodiment, by combining the first active material with a relatively large (volume) median diameter with the second active material with a relatively small (volume) median diameter, this application increases the powder compaction density of the positive active material layer, thereby increasing the energy density of the lithium secondary battery.

Optionally, the positive active material layer further includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

Optionally, the positive active material layer further includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared by the following method: mixing the above constituents of the positive electrode plate to form a positive electrode slurry, for example, dispersing a first positive active material and/or a second positive active material, a conductive agent, a binder, and any other constituents into a solvent (such as N-methyl-pyrrolidone) to form a positive electrode slurry, and subsequently, applying the positive electrode slurry onto at least one side of the positive current collector, and performing steps such as oven-drying and cold-pressing to obtain a positive electrode plate.

**[Negative electrode plate]**

The negative electrode plate typically includes a negative current collector and a negative active material layer disposed on at least one surface of the negative current collector. The negative active material layer includes a negative active material.

As an example, the negative current collector includes two surfaces opposite to each other in a thickness direction of the current collector. The positive active material layer is disposed on either or both of the two opposite surfaces of the negative current collector.

Optionally, the negative current collector may be a metal foil or a composite current collector. For example, the

metal foil may be copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

Optionally, a (volume) median diameter $Dv50_3$ of the negative active material satisfies: 6 $\mu$m $\leq Dv50_3$, and optionally 15 $\mu$m $\leq Dv50_3 \leq$ 20 $\mu$m.

Specifically, $Dv50_3$ may be 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, 15 $\mu$m, 16 $\mu$m, 17 $\mu$m, 18 $\mu$m, 19 $\mu$m, 20 $\mu$m, or a value falling within a range formed by any two thereof.

In this embodiment, by setting the (volume) median diameter of the negative active material to a value within an appropriate range, the powder compaction density of the negative active material layer is increased. In addition, after the first additive and/or the second additive forms an SEI film on the surface of the negative active material layer, the (volume) median diameter of the negative active material on the surface of the negative active material layer is increased, and the specific surface area is decreased, thereby further reducing the contact area between the negative active material and the electrolyte solution, and in turn, reducing the probability of gassing of the electrolyte solution on the surface of the negative active material layer, and improving the cycle performance of the lithium secondary battery.

Optionally, the specific surface area of the negative active material satisfies: 0.5 $m^2/g \leq$ BET $\leq$ 2.0 $m^2/g$, and optionally 0.8 $m^2/g \leq$ BET $\leq$ 1.5 $m^2/g$.

Specifically, the BET may be 0.5 $m^2/g$, 0.6 $m^2/g$, 0.7 $m^2/g$, 0.8 $m^2/g$, 0.9 $m^2/g$, 1.0 $m^2/g$, 1.1 $m^2/g$, 1.2 $m^2/g$, 1.3 $m^2/g$, 1.5 $m^2/g$, 1.6 $m^2/g$, 1.7 $m^2/g$, 1.8 $m^2/g$, 1.9 $m^2/ g$, 2.0 $m^2/g$, or a value falling within a range formed by any two thereof.

In this embodiment, by setting the specific surface area of the negative active material to a value within an appropriate range, after the first additive and/or the second additive forms an SEI film on the surface of the negative active material layer, the specific surface area of the negative active material on the surface of the negative active material layer is further decreased, thereby reducing the probability of gassing of the electrolyte solution on the surface of the negative active material layer, and further improving the cycle performance of the lithium secondary battery.

Optionally, the negative active material layer further includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

Optionally, in an embodiment, the negative electrode film layer further includes a conductive agent. The conductive agent may be at least one selected from superconductive carbon, acetylene black, carbon black, Ketjen black, carbon dots, carbon nanotubes, graphene, or carbon nanofibers.

Optionally, the negative electrode film layer further includes other agents, such as a thickener (for example, sodium carboxymethyl cellulose (CMC-Na)).

In some embodiments, the negative electrode plate may be prepared by the following method: mixing the above constituents of the negative electrode plate to form a negative electrode slurry, for example, dispersing the negative active material, a conductive agent, a binder, and any other constituents into a solvent (such as N-methyl-pyrrolidone) to form a negative electrode slurry, and subsequently, applying the negative electrode slurry onto a negative current collector, and performing steps such as oven-drying and cold-pressing to obtain a negative electrode plate.

**[Separation piece]**

Optionally, in an embodiment, the lithium secondary battery further includes a separation piece. The type of the separation piece is not particularly limited herein. For example, the separation piece may be any well-known porous separator that is well stable both chemically and mechanically.

Optionally, in an embodiment, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

Optionally, in an embodiment, the positive electrode plate, the negative electrode plate, and the separator may be made into an electrode assembly by winding or stacking.

Optionally, in an embodiment, the lithium secondary battery includes an outer package. The outer package may be configured to package the electrode assembly and the electrolyte.

Optionally, in an embodiment, the outer package of the lithium secondary battery may be a hard shell such as a hard plastic shell, an aluminum shell, a steel shell, or the like. Alternatively, the outer package of the lithium secondary battery may be a soft package such as a pouch-type soft package. The soft package may be made of plastic such as polypropylene, polybutylene terephthalate, or polybutylene succinate.

The shape of the lithium secondary battery is not particularly limited in this application, and may be cylindrical, prismatic or any other shape. FIG. 1 shows a prismatic lithium secondary battery 10 as an example.

In some embodiments, referring to FIG. 2, the outer package may include a housing 22 and a cover plate 21. The housing 22 may include a bottom plate and a side plate connected to the bottom plate. The bottom plate and the side plate close in to form an accommodation cavity. The housing 22 is provided with an opening that communicates to the accommodation cavity. The cover plate 21 can be placed over the opening to seal the accommodation cavity. The positive electrode plate, the negative electrode plate, and the separation piece may be made into the electrode assembly 23 by winding or stacking. The electrode assembly 23 is packaged in the accommodation cavity. The electrode assembly 23 is infiltrated in the electrolyte solution. The number of electrode assemblies 23 in a lithium secondary battery 10 may be one or more, and may be selected by a person skilled in the art as actually required.

In some embodiments, lithium secondary batteries 10 may be assembled to form a battery module. The battery module may include one or more lithium secondary batteries 10, and the specific number of lithium secondary batteries in a battery module may be selected by a person skilled in the art depending on the use and capacity of the battery module.

FIG. 3 shows a battery module 300 as an example. Referring to FIG. 3, in the battery module 300, a plurality of lithium secondary batteries 10 may be arranged sequentially along a length direction of the battery module 300. Alternatively, the secondary batteries may be arranged in any other manner. Further, the plurality of lithium secondary batteries 10 may be fixed by a fastener.

Optionally, in an embodiment, the battery module 300 may further include a shell that provides an accommodation space. The plurality of lithium secondary batteries 300 are accommodated in the accommodation space.

Optionally, in an embodiment, the battery module 300 may be assembled to form a battery pack. The battery pack may include one or more battery modules 300, and the specific number of battery modules in a battery pack may be selected by a person skilled in the art depending on the use and capacity of the battery pack.

FIG. 4 and FIG. 5 show a battery pack 400 as an example. Referring to FIG. 4 and FIG. 5, the battery pack 400 may include a battery box and a plurality of battery modules 300 disposed in the battery box. The battery box includes an upper box 401 and a lower box 402. The upper box 401 fits the lower box 402 to form a closed space for accommodating the battery modules 300. The plurality of battery modules 300 may be arranged in the battery box in any manner.

The lithium secondary battery 10 described in this application is also referred to as a lithium battery cell. Optionally, in an embodiment, a plurality of lithium battery cells are integrated to form a battery module first, and then the battery module is mounted in a battery box to form a battery pack. In some other production and processing techniques, a plurality of lithium battery cells may be directly mounted in a battery box to form a battery pack, without forming the battery module as an intermediate state, thereby reducing the mass of the battery pack and increasing the energy density of the battery pack.

FIG. 6 is a schematic diagram of an electrical device 600 according to an embodiment of this application.

Understandably, the electrical device 600 includes at least one of the lithium secondary battery 10, the battery module 300, or the battery pack 400 according to this application. The lithium secondary battery 10, the battery module 300, or the battery pack 400 may be used as a power supply of the electrical device 600, or used as an energy storage unit of the electrical device 600. The electrical device 600 may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The lithium secondary battery 10, the battery module 300, or the battery pack 400 may be selected for use in the electrical device 600 depending on the use requirements of the electrical device.

In an example of the electrical device 600, as shown in FIG. 6, the electrical device 600 may be a battery electric vehicle, a hybrid electric vehicle, a plug-in hybrid electric vehicle, or the like. The electrical device may employ a battery pack 400 or a battery module 300 in order to meet the requirements of the electrical device 600 on a high power and a high energy density of the lithium secondary battery 10.

In another example, the electrical device 600 may be a mobile phone, a tablet computer, a laptop computer, or the like. The device is generally required to be thin and light, and may use the lithium secondary battery 10 as a power supply.

The following describes some embodiments of this application. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

**Embodiment 1**

(1) Preparing a positive electrode plate

Using lithium iron phosphate with a Dv50 value of 10 μm as a positive active material. Dissolving the positive active material, acetylene black as a conductive agent, and polyvinylidene difluoride (PVDF) as a binder at a mass ratio of

90: 5: 5 in an N-methylpyrrolidone (NMP) solvent, and stirring well to obtain a slurry. Applying the slurry evenly onto positive current collector aluminum foil, and performing oven-drying, cold-pressing, and slitting to obtain a positive electrode plate. The lithium-ion diffusion coefficient $D_s$ of the positive active material layer in the positive electrode plate is $3.4\times10^{-12}$ $cm^2/s$, and the powder compaction density of the positive electrode plate is 2.5 $g/cm^3$.

(2) Preparing a negative electrode plate

Using natural graphite as a negative active material. Dissolving the negative active material, acetylene black as a conductive agent, styrene-butadiene rubber (SBR) as a binder, sodium carboxymethyl cellulose (CMC) as a thickener at a mass ratio of 90: 4: 4: 2 in deionized water, and stirring well to obtain a negative electrode slurry. Applying the negative electrode slurry evenly onto negative current collector copper foil, and performing the steps of oven-drying, cold-pressing, and slitting to obtain a negative electrode plate 1. The specific surface area of the negative active material in the negative electrode plate 1 is 0.8 $m^2/g$.

(3) Preparing an electrolyte solution

Mixing ethylene carbonate (EC) and ethyl methyl carbonate (EMC) evenly at a volume ratio of 3: 7 in an argon atmosphere glovebox (in which the content of $H_2O$ is less than 0.1 ppm, and the content of $O_2$ is less than 0.1 ppm), and then adding the compound represented by Formula (I-II) to prepare a solvent. Adjusting the amount of the added compound represented by Formula (I-II) so that the mass fraction $W_1$ of the compound in the solvent is 60%. Stirring well. Subsequently, adding lithium hexafluorophosphate ($LiPF_6$) as a solute, dissolving the solute in the solvent so that the mass fraction of the solute in the electrolyte solution is 12.5%. Stirring well to obtain an electrolyte solution.

(4) Assembling a lithium secondary battery

Stacking the positive electrode plate, the separator, and the negative electrode plate in sequence so that the separator is located between the positive electrode plate and the negative electrode plate to isolate the positive electrode plate from the negative electrode plate; and then winding the stacked components to obtain an electrode assembly; placing the electrode assembly into a housing, drying the housed electrode assembly, and then injecting an electrolyte solution into the electrode assembly; and performing steps such as chemical formation and static standing to obtain the lithium secondary battery in Embodiment 1.

**Embodiment 2**

In contrast to Embodiment 1, in Embodiment 2, the lithium iron phosphate with a Dv50 value of 10 μm is selected as a positive active material. The lithium-ion diffusion coefficient $D_s$ of the positive active material layer in the positive electrode plate is $2.7\times10^{-9}$ $cm^2/s$, and the mass fraction $W_1$ of the compound represented by Formula (I-II) in the solvent is 70%.

**Embodiment 3**

In contrast to the lithium secondary battery in Embodiment 1, in Embodiment 3, the lithium iron phosphate with a Dv50 value of 10 μm is selected as a positive active material. The lithium-ion diffusion coefficient $D_s$ of the positive active material layer in the positive electrode plate is $2.7\times10^{-9}$ $cm^2/s$.

**Embodiment 4**

In contrast to Embodiment 1, in Embodiment 4, the solvent includes the compound represented by Formula (I-V), and the mass fraction $W_1$ of the compound represented by Formula (I-V) in the solvent is 60%.

**Embodiment 5**

In contrast to Embodiment 1, in Embodiment 5, the solvent includes the compound represented by Formula (I-VIII), and the mass fraction $W_1$ of the compound represented by Formula (I-VIII) in the solvent is 60%.

**Embodiment 6**

In contrast to Embodiment 1, in Embodiment 6, the electrolyte solution includes a first additive, the first additive is

a compound represented by Formula (II-XXXII), and the mass fraction $W_2$ of the compound represented by Formula (II-XXXII) in the electrolyte solution is 1.0%.

**Embodiment 7**

In contrast to Embodiment 1, in Embodiment 7, the first additive is a compound represented by Formula (II-XVII), and the mass fraction $W_2$ of the compound represented by Formula (II-XVII) in the electrolyte solution is 1.0%.

**Embodiment 8**

In contrast to Embodiment 6, in Embodiment 8, the first additive is a compound represented by Formula (II-XXXII), and the mass fraction $W_2$ of the compound represented by Formula (II-XXXII) in the electrolyte solution is 1.5%.

**Embodiment 9**

In contrast to Embodiment 1, in Embodiment 9, the electrolyte solution includes a second additive, the second additive is lithium difluoro(oxalato)borate LiDFOB, and the mass fraction $W_3$ of the LiDFOB in the electrolyte solution is 0.05%.

**Embodiment 10**

In contrast to Embodiment 1, in Embodiment 10, the second additive is lithium difluoro(bisoxalato)phosphate (LiBODFP), and the mass fraction $W_3$ of the LiBODFP in the electrolyte solution is 1.0%.

**Embodiment 11**

In contrast to Embodiment 2, in Embodiment 11, the second additive is LiDFOB, the mass fraction $W_1$ of the compound represented by Formula (I-II) in the solvent is 70%, and the mass fraction $W_3$ of the LiDFOB in the electrolyte solution is 1.0%.

**Embodiment 12**

In contrast to Embodiment 1, in Embodiment 12, the first additive is a compound represented by Formula (I-II), the second additive is LiDFOB, the mass fraction $W_2$ of the compound represented by Formula (I-II) in the electrolyte solution is 0.5%, and the mass fraction $W_3$ of the LiDFOB in the electrolyte solution is 0.5%.

**Embodiment 13**

In contrast to Embodiment 1, in Embodiment 13, the lithium iron phosphate with a Dv50 value of 10 $\mu$m is used as a first positive active material, and the lithium iron phosphate with a Dv50 value of 2 $\mu$m is used as a second positive active material; the first positive active material, the second positive active material, acetylene black as a conductive agent, and polyvinylidene difluoride (PVDF) as a binder are mixed at a mass ratio of 63: 27: 5: 5 in an N-methylpyrrolidone (NMP) solvent, and stirred well to obtain a slurry. The slurry is applied evenly onto positive current collector aluminum foil, and the coated foil is subjected to oven-drying, cold-pressing, and slitting to obtain a positive electrode plate. The mass fraction $W_4$ of the second positive active material in the positive active material layer is 30%, and the powder compaction density of the positive electrode plate is 2.6 g/cm$^3$.

**Embodiment 14**

In contrast to Embodiment 13, in Embodiment 14, the mass fraction $W_4$ of the second positive active material in the positive active material layer is 10%, and the powder compaction density of the positive electrode plate is 2.55 g/cm$^3$.

**Embodiment 15**

In contrast to Embodiment 1, in Embodiment 15, the artificial graphite with a specific surface area of 1.5 m$^2$/g is selected as a negative active material.

**Embodiment 16**

In contrast to Embodiment 1, in Embodiment 16, the solvent includes both the compound represented by Formula (I-II) and the compound represented by Formula (I-I). The mass ratio of the compound represented by Formula (I-II) to the compound represented by Formula (I-I) is 30: 30.

**Comparative Embodiment 1**

In contrast to Embodiment 1, in Comparative Embodiment 1, dimethyl carbonate (DMC) is selected as a solvent.

**Comparative Embodiment 2**

In contrast to Embodiment 1, this comparative embodiment selects lithium iron phosphate as a positive active material. The lithium-ion diffusion coefficient $D_s$ of the positive active material layer is $7.3 \times 10^{-20}$ $cm^2/s$, and the mass fraction $W_1$ of the compound represented by Formula (I-II) in the solvent is 60%.

The product parameters in different embodiments and comparative embodiments are detailed in Table 1.

**Table 1 Product parameters in different embodiments and comparative embodiments**

| Embodiment | $D_s$ of positive electrode ($cm^2/s$) | Powder compaction density of positive electrode ($g/cm^3$) | BET of negative electrode ($m^2/g$) | Compound | W1 (%) | First additive | W2 (%) | Second additive | W3 (%) |
|---|---|---|---|---|---|---|---|---|---|
| Embodiment 1 | $10^{-12}$ | 2.5 | 0.8 | I-II | 60 | / | / | / | / |
| Embodiment 2 | $10^{-9}$ | 2.5 | 0.8 | I-II | 70 | / | / | / | / |
| Embodiment 3 | $10^{-9}$ | 2.5 | 0.8 | I-II | 60 | / | / | / | / |
| Embodiment 4 | $10^{-12}$ | 2.5 | 0.8 | I-V | 60 | / | / | / | / |
| Embodiment 5 | $10^{-12}$ | 2.5 | 0.8 | I-VIII | 60 | / | / | / | / |
| Embodiment 6 | $10^{-12}$ | 2.5 | 0.8 | I-II | 60 | II-XXXII | 1.0 | / | / |
| Embodiment 7 | $10^{-12}$ | 2.5 | 0.8 | I-II | 60 | II-XVII | 1.0 | / | / |
| Embodiment 8 | $10^{-12}$ | 2.5 | 0.8 | I-II | 70 | II-XXXII | 1.50 | / | / |
| Embodiment 9 | $10^{-12}$ | 2.5 | 0.8 | I-II | 60 | / | / | LiDFOB | 0.05 |
| Embodiment 10 | $10^{-12}$ | 2.5 | 0.8 | I-II | 60 | / | / | LiBODFP | 1.0 |
| Embodiment 11 | $10^{-12}$ | 2.5 | 0.8 | I-II | 70 | / | / | LiDFOB | 1.0 |
| Embodiment 12 | $10^{-12}$ | 2.5 | 0.8 | I-II | 60 | II-XXXII | 0.50 | LiDFOB | 0.50 |
| Embodiment 13 | $10^{-12}$ | 2.6 | 0.8 | I-II | 60 | / | / | / | / |
| Embodiment 14 | $10^{-12}$ | 2.55 | 0.8 | I-II | 60 | / | / | / | / |

(continued)

| Embodiment | $D_s$ of positive electrode ($cm^2/s$) | Powder compaction density of positive electrode ($g/cm^3$) | BET of negative electrode ($m^2/g$) | Compound | W1 (%) | First additive | W2 (%) | Second additive | W3 (%) |
|---|---|---|---|---|---|---|---|---|---|
| Embodiment 15 | $10^{-12}$ | 2.5 | 1.5 | I-II | 60 | / | / | / | / |
| Embodiment 16 | $10^{-12}$ | 2.5 | 0.8 | I-II+I-I | 60 | / | / | / | / |
| Comparative Embodiment 1 | $10^{-12}$ | 2.5 | 0.8 | DMC | 60 | / | / | / | / |
| Comparative Embodiment 2 | $10^{-20}$ | 2.5 | 0.8 | I-II | 90 | / | / | / | / |

In Table 1, the $D_s$ of the positive electrode is the lithium-ion diffusion coefficient $D_s$ of the positive active material layer of the positive electrode plate. The powder compaction density of the positive electrode is the powder compaction density of the positive electrode plate. The BET of the negative electrode is the BET of the negative active material. The compound is the compound included in the solvent. $W_1$ is the mass fraction of the compound in the solvent. $W_2$ is the mass fraction of the first additive in the electrolyte solution. $W_3$ is the mass fraction of the second additive in the electrolyte solution.

Understandably, the difference in lithium-ion diffusion coefficient $D_s$ is usually directly reflected in the order of magnitude. Therefore, the lithium-ion diffusion coefficient $D_s$ of the positive active material layer in the above table shows the order of magnitude of the lithium-ion diffusion coefficient. For example, in Embodiment 1, $D_s$ is specifically $3.4\times10^{-12}$, and simply $10^{-12}$ is shown in Table 1.

The test results of battery performance in Embodiments 1 to 16 and Comparative Embodiments 1 to 2 are detailed in Table 2.

**Table 2 Test results of battery performance in different embodiments and comparative embodiments**

| | 0.5C discharge capacity of battery (Ah) | Fast-charge time (min) | Number of cycles of battery at 60°C when capacity fades to 80% | Volume expansion rate of 100%SoC battery after 30 days of storage at 60 °C (%) |
|---|---|---|---|---|
| Embodiment 1 | 151.2 | 27 | 1255 | 6.10 |
| Embodiment 2 | 151.1 | 27 | 1231 | 6.2 |
| Embodiment 3 | 149.6 | 26.5 | 1173 | 8.90 |
| Embodiment 4 | 148.7 | 32.4 | 1141 | 6.7 |
| Embodiment 5 | 147.9 | 30.5 | 1013 | 7.5 |
| Embodiment 6 | 152.6 | 27 | 1327 | 5.7 |
| Embodiment 7 | 151.7 | 27 | 1294 | 5.3 |
| Embodiment 8 | 149.1 | 26.7 | 1179 | 4.5 |
| Embodiment 9 | 151.3 | 26.8 | 1276 | 5.3 |
| Embodiment 10 | 151.2 | 27 | 1290 | 5.7 |
| Embodiment 11 | 150.7 | 26.8 | 1191 | 4.8 |
| Embodiment 12 | 153.1 | 26.5 | 1401 | 3.9 |
| Embodiment 13 | 153.1 | 26.5 | 1201 | 6.7 |

(continued)

| | 0.5C discharge capacity of battery (Ah) | Fast-charge time (min) | Number of cycles of battery at 60°C when capacity fades to 80% | Volume expansion rate of 100%SoC battery after 30 days of storage at 60 °C (%) |
|---|---|---|---|---|
| Embodiment 14 | 151.9 | 26.8 | 1237 | 6.3 |
| Embodiment 15 | 149.1 | 26.9 | 1105 | 7.2 |
| Embodiment 16 | 151.2 | 27.5 | 1286 | 5.8 |
| Comparative Embodiment 1 | 146.1 | 38.1 | 952 | 15.8 |
| Comparative Embodiment 2 | 147.3 | 35.5 | 1011 | 9.7 |

As can be seen from Embodiments 1, 4, 5, and 16 versus Comparative Embodiment 1, by introducing the compounds represented by Formula (I-II), Formula (IV), Formula (I-VIII), and Formula (I-I) into the solvent, this application alleviates the problem of mismatch of the lithium-ion diffusion capability between the positive active material layer and the electrolyte solution in the lithium secondary battery. Therefore, in terms of discharge capacity, fast-charge capability, and cycle life of the lithium secondary batteries, Embodiments 1, 4, 5, and 16 are superior to Comparative Embodiment 1 in which the solvent contains no compound represented by Formula (I). Moreover, the lithium secondary batteries in Embodiments 1, 4, 5, and 16 also exhibit a relatively low volume expansion rate and significantly improved safety performance.

As can be seen from Embodiment 1 versus Comparative Embodiment 2, when the compound represented by Formula (I) is added in the solvent, the product of the mass fraction $W_1$ of the compound in the solvent and the lithium-ion diffusion coefficient $D_s$ of the positive active material layer) in Embodiment 1, denoted as $W_1 \times D_s$, is $6\times10^{-11}$ $cm^2/s$, falling within the range of $2\times 10^{-18}$ $cm^2/s$ to $8\times10^{-6}$ $cm^2/s$, and further, falling within the range of $3 \times10^{-14}$ $cm^2/s$ to $7\times 10^{-10}$ $cm^2/s$. However, in Comparative Embodiment 2, $W_1 \times D_s$ is $9\times 10^{-11}$ $cm^2/s$, going beyond the above range. The discharge capacity, fast-charge capability, and cycle life in Comparative Embodiment 2 are all inferior to those in Embodiment 1. Therefore, by controlling the value of $D_s \times W_1$ within an appropriate range, this application alleviates the problem of mismatch of the lithium-ion diffusion capability between the positive active material layer and the electrolyte solution in the lithium secondary battery, thereby improving the discharge capacity, fast-charge capability, cycle life, and safety performance of the lithium secondary battery.

As can be seen from Embodiment 3 versus Embodiment 2, when $D_s$ increases, the $W_1$ in Embodiment 2 is increased, but the $W_1$ in Embodiment 3 is not increased. The performance of the lithium secondary battery in Embodiment 3 is slightly inferior to that in Embodiment 2. Therefore, controlling $D_s$ to be positively correlated to $W_1$ can improve the discharge capacity, fast-charge capability, cycle life, and safety performance of the lithium secondary battery.

As can be seen from Embodiments 6 and 7 versus Embodiment 1, the compounds represented by Formula (II-XXXII) and Formula (II-XVII) are added as a first additive into the electrolyte solutions in Embodiments 6 and 7 respectively, and therefore, in Embodiments 6 and 7, the cycle performance of the lithium secondary batteries is significantly superior to the cycle performance of the lithium secondary battery in Embodiment 1, and the volume expansion rate is less than that of the lithium secondary battery in Embodiment 1. Therefore, the first additive added in the electrolyte solution can effectively reduce the side reactions of the electrolyte solution on the surface of the negative active material layer while improving the lithium-ion conductivity of the electrolyte solution, thereby improving the cycle performance and safety performance of the lithium secondary battery.

As can be seen from Embodiment 8 versus Embodiment 6, when $W_1$ increases, the $W_2$ in Embodiment 8 is increased. The volume expansion rate of the lithium secondary battery in Embodiment 8 is lower than that of the lithium secondary battery in Embodiment 6. Therefore, controlling $W_2$ to be positively correlated to $W_1$ can further improve the safety performance of the lithium secondary battery.

As can be seen from Embodiments 9 and 10 versus Embodiment 1, the LiDFOB and LiBODFP are added as a second additive into the electrolyte solutions in Embodiments 9 and 10 respectively, and therefore, in Embodiments 9 and 10, the cycle performance of the lithium secondary batteries is significantly superior to the cycle performance of the lithium secondary battery in Embodiment 1, and the volume expansion rate is less than that of the lithium secondary battery in Embodiment 1. Therefore, the second additive added in the electrolyte solution can effectively reduce the side reactions of the electrolyte solution on the surface of the negative active material layer while improving the lithium-ion conductivity of the electrolyte solution, thereby improving the cycle performance and safety performance of the lithium secondary battery.

As can be seen from Embodiment 11 versus Embodiment 9, when $W_1$ increases, the $W_3$ in Embodiment 11 is increased. The volume expansion rate of the lithium secondary battery in Embodiment 11 is lower than that of the lithium secondary battery in Embodiment 9. Therefore, controlling $W_3$ to be positively correlated to $W_1$ can further improve the

safety performance of the lithium secondary battery.

As can be seen from Embodiment 12 versus Embodiments 6 and 9, in Embodiment 12, both the first additive and the second additive are added in the electrolyte solution, and therefore, in Embodiment 12, the cycle performance of the lithium secondary battery is significantly improved, and the volume expansion rate is significantly reduced. Therefore, as can be seen, the first additive and the second additive work in unison in the electrolyte solution to further improve the cycle performance and safety performance of the lithium secondary battery.

As can be seen from Embodiment 13 versus Embodiment 1, the second positive active material with a relatively small $Dv50_2$ value is introduced into the positive active material layer in Embodiment 13, thereby increasing the powder compaction density of the positive electrode plate. In contrast to Embodiment 1, the discharge capacity of the lithium secondary battery in Embodiment 13 is improved. Therefore, by use of positive active materials of different particle sizes, the powder compaction density of the positive active material layer is improved, thereby improving the discharge capacity of the lithium secondary battery.

As can be seen from Embodiment 14 versus Embodiment 13, in Embodiment 14, the mass fraction $W_4$ of the second positive active material with a relatively small $Dv50_2$ value in the positive active material layer is reduced, so that the powder compaction density of the positive electrode plate is reduced, and the discharge capacity of the lithium secondary battery is also reduced. Therefore, the controlled mass fraction $W_4$ of the second positive active material with a relatively small volume median diameter in the positive active material layer can affect the powder compaction density of the positive electrode plate, thereby affecting the energy density of the lithium secondary battery, and in turn, affecting the discharge capacity of the lithium secondary battery.

Understandably, the volume median diameter and specific surface area of a material are interrelated physical quantities. The larger the volume median diameter of the material, the smaller the BET of the material will usually be; the smaller the volume median diameter of the material, the larger the BET will usually be.

As can be seen from Embodiment 15 versus Embodiment 1, in Embodiment 15, the negative active material possesses a smaller $Dv50_3$ value and a larger BET value, and therefore, the discharge capacity, fast-charge performance, and cycle performance of the lithium secondary battery in Embodiment 1 are all superior to those of the lithium secondary battery in Embodiment 15, and the volume expansion rate of the lithium secondary battery in Embodiment 1 is lower. Therefore, as can be seen, the volume median diameter or specific surface area of the negative active material affects the performance of the lithium secondary battery. The negative active material with a relatively large $Dv50_3$ value and a relatively small BET value lead to a smaller contact area with the electrolyte solution, thereby reducing the probability that the electrolyte solution undergoes side reactions on the surface of the negative active material layer, and in turn, improving various performance metrics of the lithium secondary battery.

Next, the test methods of physical parameters and performance parameters mentioned in some embodiments of this application are described below briefly.

1. Method for testing the lithium-ion diffusion coefficient

The lithium-ion diffusion coefficient may be tested by conventional methods in the art, such as cyclic voltammetry (CV), electrochemical impedance spectroscopy (EIS), constant-potential galvanostatic intermittent titration technique (GITT), constant-current galvanostatic intermittent titration technique (GITT). The lithium-ion diffusion coefficient is calculated based on the Fick's first law and the Fick's second law.

Using an electrochemical impedance spectroscopy method as an example, the method for testing the lithium-ion diffusion coefficient of the positive active material layer includes the following steps: (i) mixing well the positive active material prepared in an embodiment or a comparative embodiment of this application, acetylene black as a conductive agent, and polyvinylidene fluoride as a binder at a mass ratio of 85: 10: 5, adding N-methylpyrrolidone to form a slurry, and applying the slurry onto an aluminum sheet, and performing vacuum-drying at 60 °C for 5 hours to obtain a positive electrode plate specimen; (ii) making a CR2032 button half-cell specimen in a high-argon environment by assembling the ready-made specimen as a positive electrode, a metal lithium sheet as a negative electrode, a Celgard 2400 polypropylene microporous film as a separator, and an electrolyte solution, where the electrolyte solution is prepared by mixing ethylene carbonate (EC) and diethyl carbonate (DEC) at a volume ratio of 1: 1 to form a solution and then adding $LiPF_6$ at a concentration of 1 mol/L; and (iii) performing an electrochemical impedance spectroscopy (EIS) test on the half-cell by using an electrochemical workstation (CHI660b, Shanghai CH Instruments Co., Ltd.) in which the amplitude of 5 mV and the frequency is 10 mHz to 100 KHz, thereby obtaining an electrochemical impedance spectrum (Nyquist spectrum) of the half-cell specimen. Performing curve fitting on the electrochemical impedance spectrum. Calculating a Warburg constant of the half-cell specimen based on the Fick's second law and the Nernst equation. Calculating the lithium-ion diffusion coefficient of the positive active material layer with reference to the Butler-Volmer equation by using the following formula:

$$D_s = 0.5 \times \left[\frac{V_m}{FS\sigma}\left(-\frac{dE}{dx}\right)\right]^2$$

In the formula above, σ is the Warburg constant, F is the Faraday constant, S is the surface area of the positive electrode (in $cm^2$), $V_m$ is the molar volume of the positive active material (in $cm^2$/mol), and dE/dx is the slope of the Coulometric titration line of the positive electrode. The Coulometric titration line may be obtained by a method well-known in the art. For example, the Coulometric titration line may be obtained by testing with a constant-current electrolysis device.

2. Method for testing the (volume) median diameter

In this application, the volume median diameter Dv50 of the active material bears the meaning well-known in the art, and may be determined by an instrument and method known in the art. For example, the volume median diameter may be determined by using a laser particle size analyzer (such as Mastersizer 3000) with reference to the standard GB/T 19077-2016 *Particle Size Analysis-Laser Diffraction Method.*

3. BET test method

Measuring the BET specific surface area with reference to the standard GB/T19587-2004 *Determination of the Specific Surface Area of Solids by Gas Adsorption Using the BET Method.*

Putting 8 to 15 grams of the specimen into a specimen tube, and recording the initial mass of the specimen. Loading the specimen weighed out into a NOVA2000e device. Starting to degas the specimen, and heating the specimen to 200 °C, and then keeping the temperature for 2 hours. Subsequently, recording the mass of the degassed specimen, and then reloading the degassed specimen into the device, and pouring liquid nitrogen into the device to perform a BET test. Setting the nitrogen pressure to 0.08 MPa to 0.12 MPa, and setting the heating temperature to 40 °C to 350 °C. Reading the specific surface area from the test results after completion of the test.

4. Method for testing the powder compaction density

Cutting out a circular piece of 1540.25 $mm^2$ in area from a positive electrode plate, and used the circular piece as a basic unit, where the total mass of the positive electrode plate coated with a positive active material on both sides is A (g), the mass of the positive current collector is B (g), the thickness of the positive current collector is T (mm), and the thickness of the aluminum foil is U (mm); and then calculating the powder compaction density (PD) of the positive electrode plate by using the following formula:

$$PD = \frac{M - B}{(T - U) * 1540.25 * 1000}$$

5. Testing the battery capacity

Charging a lithium secondary battery at a constant current of 0.5C at 25 °C until the voltage reaches 3.65 V, and then charging the battery at a constant voltage of 3.65 V until the current is less than 0.05C, and then discharging the lithium secondary battery at a constant current of 0.5C until the voltage drops to 2.5 V, and recording the discharge capacity of the battery cycled at 0.5C.

6. Testing the fast-charge time

Charging a lithium secondary battery at a current of 0.33C at 25 °C until the state of charge (SoC) reaches 10%, and then charging the battery for a period of s minutes according to a given fast-charge process so that the SoC reaches 80%. Leaving the battery to stand for 30 minutes, and then discharging the battery at a current of 1C, and leaving the battery to stand for 30 minutes, thereby completing one cycle. Cycling the battery for 20 cycles, and then fully charging the battery, disassembling the lithium secondary battery, and observing whether lithium plating occurs on the negative electrode. If no lithium plating occurs, it indicates that the lithium secondary battery is capable of being fast charged for s minutes.

7. Testing the cycle performance

Charging a lithium secondary battery at a constant current of 0.5C at 60 °C until the voltage reaches 3.65 V, and

then charging the battery at a constant voltage of 3.65 V until the current is less than 0.05C, and then discharging the lithium secondary battery at a constant current of 0.5C until the voltage drops to 2.5 V, thereby completing one charge-discharge cycle. Repeating the charge and discharge operations for a number of cycles, and counting the number of cycles when the capacity retention rate of the lithium secondary battery fades to 80%.

8. Testing the volume expansion rate

Charging, at 25 °C, a ready-made lithium secondary battery at a constant current of 0.33C until the voltage reaches 3.65 V, and then charging the battery at a constant voltage of 3.65 V until the current drops to 0.05C, and then discharging the lithium secondary battery at a constant current of 0.33C until the drops to 2.5 V, and recording the discharge capacity at this time as a discharge capacity of the lithium secondary battery before high-temperature storage. Subsequently, charging the lithium secondary battery at a constant current of 0.33C until the voltage reaches 3.65 V, and then charging the battery at a constant voltage of 3.65 V until the current drops to 0.05C and the lithium secondary battery is fully charged. Measuring the volume of the battery by using a drainage method. Subsequently, storing the lithium secondary battery at 60 °C for 60 days. Placing the lithium secondary battery in a 25 °C environment upon completion of the storage, and measuring the volume of the battery by using a drainage method. Calculating the volume expansion rate of the battery as: volume expansion rate = (post-storage volume/initial volume - 1)%.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A lithium secondary battery, wherein the lithium secondary battery comprises:

   a positive electrode plate, wherein the positive electrode plate comprises a positive current collector and a positive active material layer disposed on at least one side of the positive current collector, and a lithium-ion diffusion coefficient of the positive active material layer is $D_s$; and
   an electrolyte solution, wherein the electrolyte solution comprises a solvent; the solvent comprises at least one of compounds of the following Formula (I); a mass fraction of the compound of Formula (I) in the solvent is $W_1$; and the mass fraction $W_1$ of the compound of Formula (I) and the lithium-ion diffusion coefficient $D_s$ of the positive active material layer satisfy: $2\times10^{-18}$ cm$^2$/s $\leq W_1 \times D_s \leq 8\times10^{-6}$ cm$^2$/s, and optionally, $3\times10^{-14}$ cm$^2$/s $\leq W_1 \times D_s \leq 7\times10^{-10}$ cm$^2$/s;

   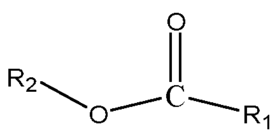

   (I)

   wherein, $R_1$ and $R_2$ each independently comprise at least one of a $C_1$ to $C_3$ alkyl or a $C_1$ to $C_3$ haloalkyl.

2. The lithium secondary battery according to claim 1, wherein $R_1$ and $R_2$ each independently comprise at least one of methyl, ethyl, propyl, fluoromethyl, fluoroethyl, or fluoropropyl.

3. The secondary battery according to claim 1 or 2, wherein $10^{-11}$ cm$^2$/s $\leq D_s \leq 10^{-5}$ cm$^2$/s, and optionally, $10^{-14}$ cm$^2$/s $\leq D_s \leq 10^{-9}$ cm$^2$/s.

4. The lithium secondary battery according to any one of claims 1 to 3, wherein $20\% \leq W_1 \leq 80\%$, and optionally, $30\% \leq W_1 \leq 70\%$.

5. The lithium secondary battery according to any one of claims 1 to 4, wherein the compounds of Formula (I) comprise at least one of the following compounds:

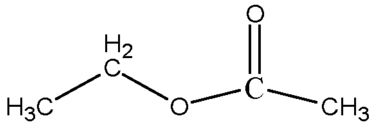

(I-I)

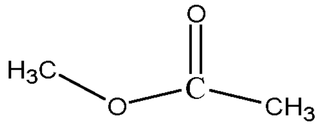

(I-II)

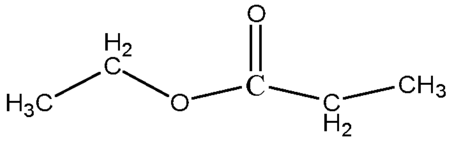

(I-III)

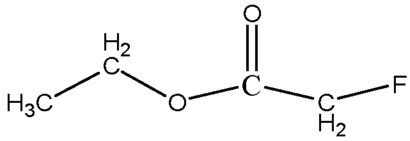

(I-IV)

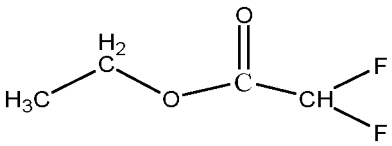

(I-V)

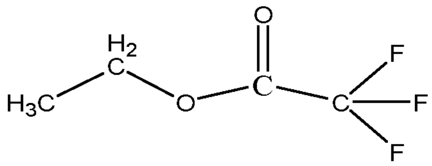

(I-VI)

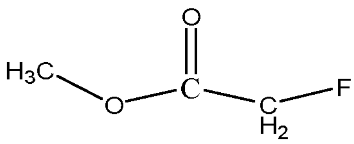

(I-VII)

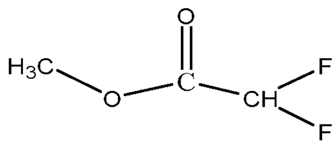

(I-VIII)

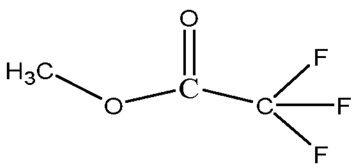

(I-IX)

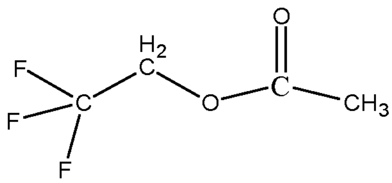

(I-X)

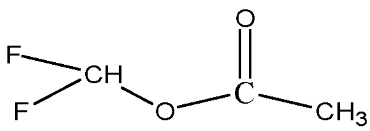

(I-XI)

optionally, the compounds of Formula (I) comprise at least one of the compound of Formula (II), the compound of Formula (I-II), the compound of Formula (IV), and the compound of Formula (I-VIII).

**6.** The lithium secondary battery according to any one of claims 1 to 5, wherein the electrolyte solution comprises a first additive, and the first additive comprises at least one of compounds of Formula (II):

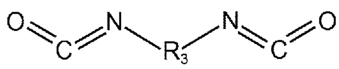

(II)

wherein, $R_3$ comprises at least one of an Ra-substituted or unsubstituted $C_2$ to $C_{10}$ alkylene, an Ra-substituted or unsubstituted $C_2$ to $C_{10}$ heteroalkylene, an Ra-substituted or unsubstituted $C_6$ to $C_{18}$ arylene, an Ra-substituted

or unsubstituted $C_6$ to $C_{18}$ heteroarylene, an Ra-substituted or unsubstituted $C_3$ to $C_{18}$ alicyclylene, or an Ra-substituted or unsubstituted $C_3$ to $C_{18}$ heteroalicyclylene; and

Ra comprises at least one of a halogen atom, a cyano group, an isocyanate ester group, a hydroxyl group, a carboxyl group, a sulfonic acid group, an ester group, a $C_2$ to $C_{10}$ alkyl, a $C_2$ to $C_{10}$ alkenyl, a $C_2$ to $C_{10}$ alkynyl, or a $C_2$ to $C_{10}$ oxaalkyl.

**7.** The lithium secondary battery according to claim 6, wherein a mass fraction of the first additive in the electrolyte solution is $W_2$, and the $W_2$, the $W_1$, and the $D_s$ satisfy: $2\times10^{-22}\ cm^2/s \leq W_2 \times W_1 \times D_s \leq 1.6\times10^{-6}\ cm^2/s$, optionally $2\times10^{-21}\ cm^2/s \leq W_2 \times W_1 \times D_s \leq 8\times10^{-7}\ cm^2fs$, and optionally $4\times10^{-21}\ cm^2/s \leq W_2 \times W_1 \times D_s \leq 4\times10^{-7}\ cm^2/s$.

**8.** The lithium secondary battery according to claim 7, wherein $W_2$ satisfies: $0.01\% \leq W_2 \leq 20\%$, optionally $0.1\% \leq W_2 \leq 10\%$, and optionally $0.2\% \leq W_2 \leq 5\%$.

**9.** The lithium secondary battery according to any one of claims 6 to 8, wherein the first additive comprises at least one of the following compounds:

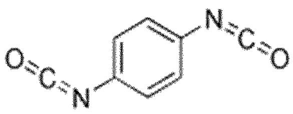
(II-I)

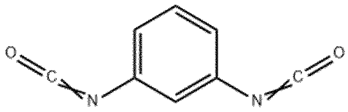
(II-II)

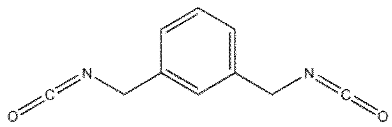
(II-III)

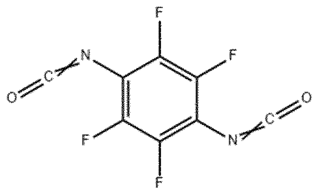
(II-IV)

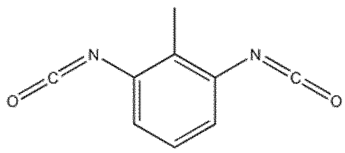
(II-V)

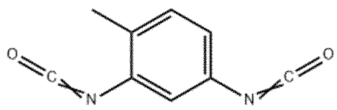
(II-VI)

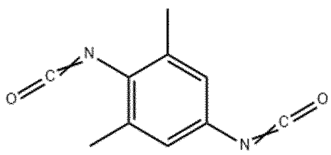
(II-VII)

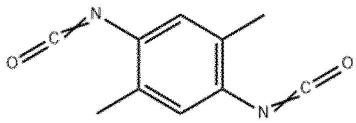
(II-VIII)

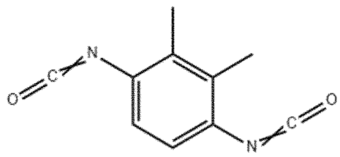
(II-IX)

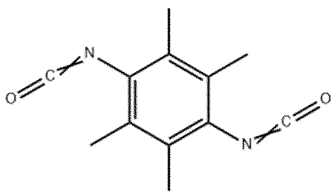
(II-X)

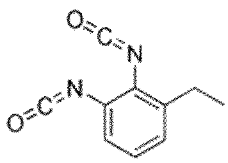
(II-XI)

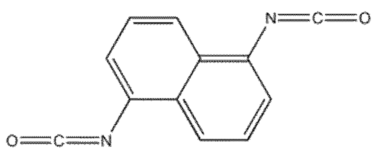
(II-XII)

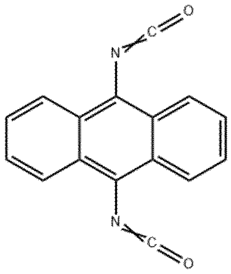
(II-XIII)

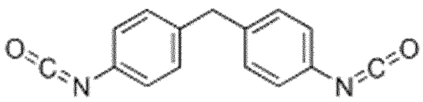
(II-XIV)

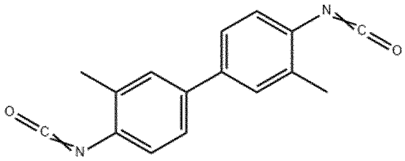
(II-XV)

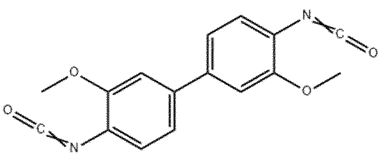
(II-XVI)

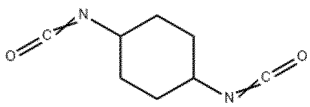
(II-XVII)

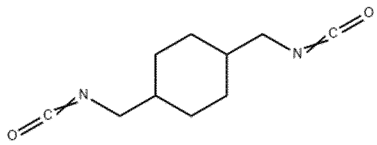
(II-XVIII)

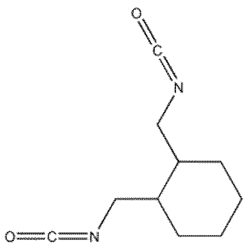
(II-XIX)

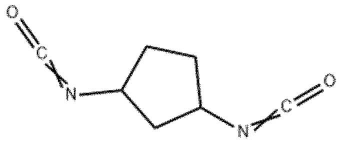
(II-XX)

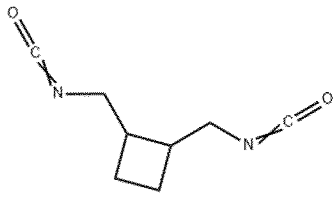
(II-XXI)

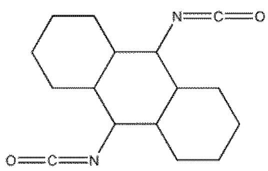
(II-XXII)

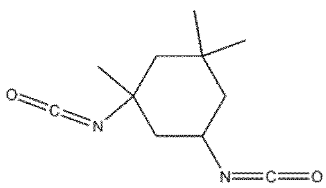
(II-XXIII)

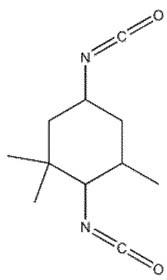
(II-XXIV)

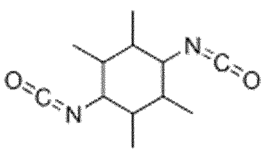
(II-XXV)

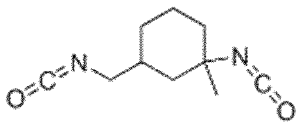
(II-XXVI)

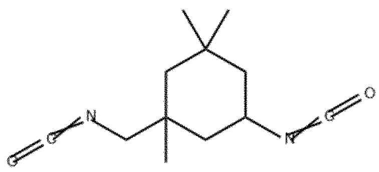
(II-XXVII)

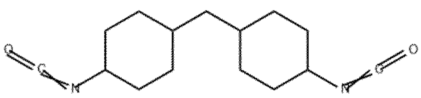
(II-XXVIII)

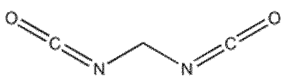
(II-XXIX)

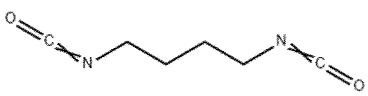
(II-XXX)

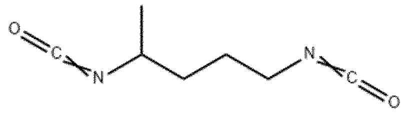

(II-XXXI)

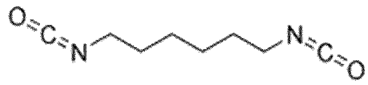

(II-XXXII).

**10.** The lithium secondary battery according to any one of claims 1 to 9, wherein the electrolyte solution comprises a second additive, and the second additive comprises at least one of $M^{a+}[F_wPO_t]^{b-}$, $M^{a+}[BF_4]^{b-}$, $M^{a+}[FSO_3]^{b-}$, or a compound of Formula (III):

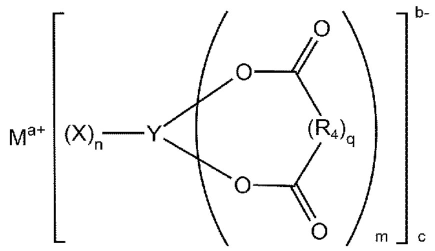

(III)

wherein, $M^{a+}$ comprises at least one of a lithium ion, a sodium ion, a potassium ion, a rubidium ion, a cesium ion, a magnesium ion, a calcium ion, a barium ion, an aluminum ion, an iron ion, a copper ion, a nickel ion, or an organic cation, and a, b, and c each represent a natural number;
t represents an integer from 0 to 3, and w represents an integer from 1 to 6;
X comprises a halogen atom, and n represents an integer from 0 to 4;
Y comprises at least one of a boron atom or a phosphorus atom;
$R_4$ comprises a substituted or unsubstituted $C_1$ to $C_{10}$ alkylene, a substituted or unsubstituted $C_1$ to $C_{10}$ haloalkylene, a substituted or unsubstituted $C_6$ to $C_{20}$ arylene, a substituted or unsubstituted $C_6$ to $C_{20}$ haloarylene, q represents an integer from 0 to 1, and m represents an integer from 1 to 3.

**11.** The lithium secondary battery according to claim 10, wherein a mass fraction of the second additive in the electrolyte solution is $W_3$, and the $W_3$, the $W_1$, and the $D_s$ satisfy: $2\times10^{-22}\ cm^2/s \le W_3 \times W_1 \times D_s \le 1.6\times10^{-6}\ cm^2/s$, optionally $2\times10^{-21}\ cm^2/s \le W_3 \times W_1 \times D_s \le 8\times10^{-7}\ cm^2/s$, and optionally $4\times10^{-21}\ cm^2/s \le W_3 \times W_1 \times D_s \le 4\times10^{-7}\ cm^2/s$.

**12.** The lithium secondary battery according to claim 11, wherein $0.01\% \le W_3 \le 20\%$, optionally $0.1\% \le W_3 \le 10\%$, and optionally $0.2\% \le W_3 \le 5\%$.

**13.** The lithium secondary battery according to any one of claims 10 to 12, wherein, in $M^{a+}[FSO_3]^{b-}$, $M^{a+}$ comprises at least one of $Li^+$, $Na^+$, $K^+$, $Rb^+$, $Cs^+$, $Mg^{2+}$, $Ca^{2+}$, $Ba^{2+}$, $Al^{3+}$, $Fe^{2+}$, $Cu^{2+}$, $Fe^{3+}$, $Ni^{2+}$, or $Ni^{3+}$.

**14.** The lithium secondary battery according to any one of claims 1 to 13, wherein the positive active material layer comprises a first positive active material and a second positive active material;

an average particle diameter $Dv50_1$ of the first positive active material satisfies: $8\ \mu m \le Dv50_1 \le 50\ \mu m$; and
an average particle diameter $Dv50_2$ of the second positive active material satisfies: $0.02\ \mu m \le Dv50_2 \le 8\ \mu m$.

**15.** The lithium secondary battery according to claim 14, wherein a mass percent $W_4$ of the second positive active material in the positive active material layer satisfies: $0\% \le W_4 \le 60\%$, and optionally $20\% \le W_4 \le 40\%$.

**16.** The lithium secondary battery according to any one of claims 1 to 15, wherein the lithium secondary battery comprises:

a negative electrode plate, wherein the negative electrode plate comprises a negative current collector and a negative active material layer disposed on the negative current collector, and the negative active material layer comprises a negative active material; and
an average particle diameter $Dv50_3$ of the negative active material satisfies: $6\ \mu m \le Dv50_3$, and optionally $15\ \mu m \le Dv50_3 \le 20\ \mu m$.

**17.** The lithium secondary battery according to claim 16, wherein a specific surface area of the negative active material satisfies: 0.5 $m^2/g$ ≤ BET ≤ 2.0 $m^2/g$, and optionally 0.8 $m^2/g$ ≤ BET ≤ 1.5 $m^2/g$.

**18.** An electrical device, wherein the electrical device comprises the lithium secondary battery according to any one of claims 1 to 17.

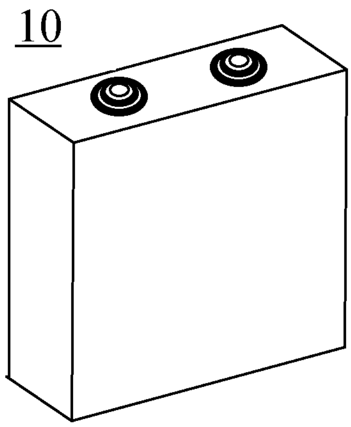


FIG. 1

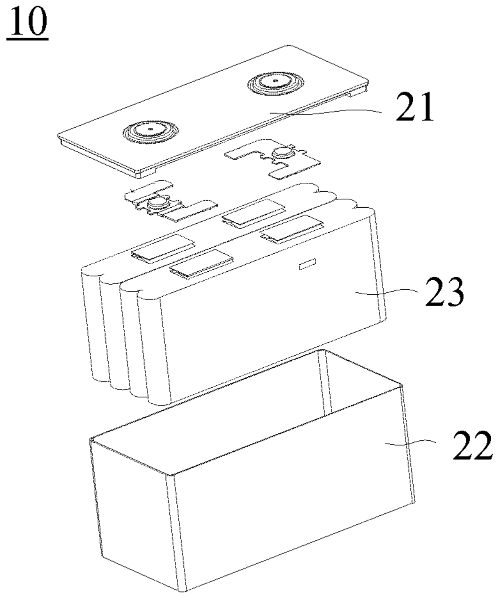


FIG. 2

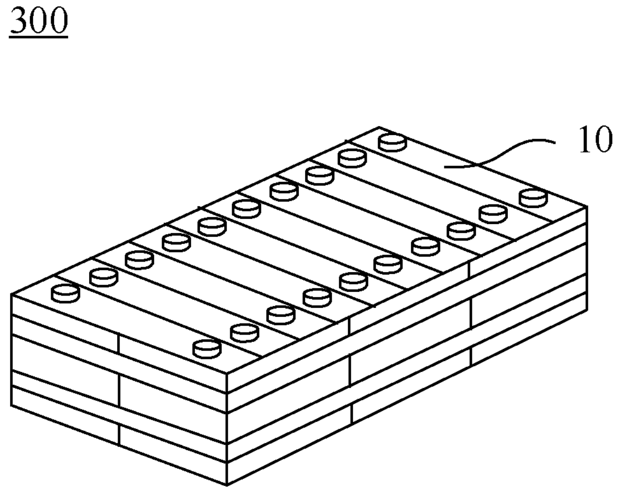


FIG. 3

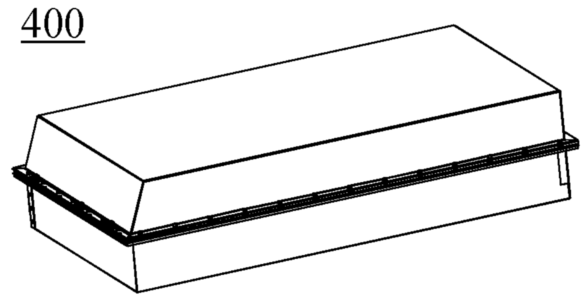


FIG. 4

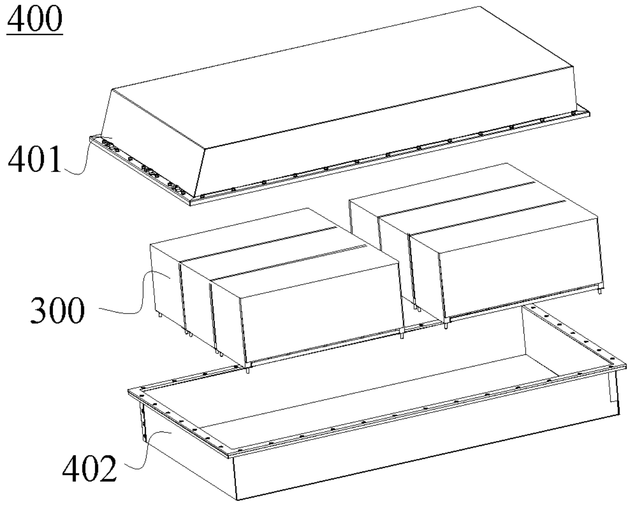


FIG. 5

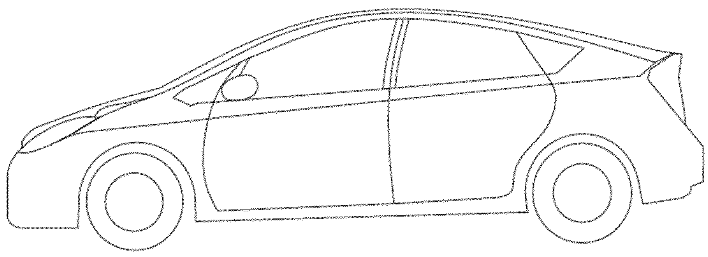

FIG. 6

## INTERNATIONAL SEARCH REPORT

International application No.
**PCT/CN2023/078089**

**A. CLASSIFICATION OF SUBJECT MATTER**

H01M10/0525(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 正极, 扩散, 羧酸酯, 乙酸甲酯, 异氰酸酯, cell, battery, positive, diffus+, Ds, carboxylic, carboxylate, MA, isocyanic, isocyanate

**C. DOCUMENTS CONSIDERED TO BE RELEVANT**

| Category* | Citation of document, with indication, where appropriate, of the relevant passages | Relevant to claim No. |
|---|---|---|
| X | CN 114204109 A (SVOLT ENERGY TECHNOLOGY CO., LTD.) 18 March 2022 (2022-03-18)<br>description, paragraphs 2 and 8-83 | 1-5, 14-18 |
| Y | CN 114204109 A (SVOLT ENERGY TECHNOLOGY CO., LTD.) 18 March 2022 (2022-03-18)<br>description, paragraphs 2 and 8-83 | 6-18 |
| Y | CN 105830270 A (UBE INDUSTRIES LIMITED) 03 August 2016 (2016-08-03)<br>description, paragraphs 189-218 | 6-18 |
| X | CN 114242932 A (SVOLT ENERGY TECHNOLOGY CO., LTD.) 25 March 2022 (2022-03-25)<br>description, paragraphs 10-93 | 1-5, 14-18 |
| Y | CN 114242932 A (SVOLT ENERGY TECHNOLOGY CO., LTD.) 25 March 2022 (2022-03-25)<br>description, paragraphs 10-93 | 6-18 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 June 2023** | **23 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2023/078089**

**C. DOCUMENTS CONSIDERED TO BE RELEVANT**

| Category* | Citation of document, with indication, where appropriate, of the relevant passages | Relevant to claim No. |
|---|---|---|
| X | CN 115663118 A (SUNWODA ELECTRIC VEHICLE BATTERY CO., LTD.) 31 January 2023 (2023-01-31) description, paragraphs 3-93 | 1-5, 14-18 |
| Y | CN 115663118 A (SUNWODA ELECTRIC VEHICLE BATTERY CO., LTD.) 31 January 2023 (2023-01-31) description, paragraphs 3-93 | 6-18 |
| A | CN 115699388 A (CONTEMPORARY AMPEREX TECHNOLOGY CO., LTD.) 03 February 2023 (2023-02-03) entire document | 1-18 |

Form PCT/ISA/210 (second sheet) (July 2022)

**INTERNATIONAL SEARCH REPORT**
**Information on patent family members**

International application No.
**PCT/CN2023/078089**

| Patent document cited in search report | | | Publication date (day/month/year) | Patent family member(s) | | | Publication date (day/month/year) |
|---|---|---|---|---|---|---|---|
| CN | 114204109 | A | 18 March 2022 | None | | | |
| CN | 105830270 | A | 03 August 2016 | JPWO | 2015093532 | A1 | 23 March 2017 |
| | | | | JP | 6380409 | B2 | 29 August 2018 |
| | | | | WO | 2015093532 | A1 | 25 June 2015 |
| | | | | US | 2021320334 | A1 | 14 October 2021 |
| | | | | US | 2018166746 | A1 | 14 June 2018 |
| | | | | US | 10263285 | B2 | 16 April 2019 |
| | | | | KR | 20160100965 | A | 24 August 2016 |
| | | | | US | 2019198928 | A1 | 27 June 2019 |
| | | | | EP | 3086396 | A1 | 26 October 2016 |
| | | | | EP | 3086396 | A4 | 19 July 2017 |
| | | | | EP | 3086396 | B1 | 05 June 2019 |
| CN | 114242932 | A | 25 March 2022 | None | | | |
| CN | 115663118 | A | 31 January 2023 | None | | | |
| CN | 115699388 | A | 03 February 2023 | None | | | |

Form PCT/ISA/210 (patent family annex) (July 2022)